# EUROPEAN PATENT SPECIFICATION

(11) **EP 4 374 248 B1**
(45) Date of publication and mention of the grant of the patent: **28.10.2026**
(21) Application number: 22777223.3
(22) Date of filing: 09.08.2022
(51) Int. Cl.: G06F 8/34, G06F 8/35, G06F 8/36

(54) **MANAGING AN APP, ESPECIALLY DEVELOPING AN APP COMPRISING AN EVENT ARTIFACT, METHOD AND SYSTEM**
VERWALTUNG EINER APP, INSBESONDERE ZUR ENTWICKLUNG EINER APP MIT EINEM EREIGNISARTEFAKT, VERFAHREN UND SYSTEM
GESTION D'UNE APPLICATION, EN PARTICULIER LE DÉVELOPPEMENT D'UNE APPLICATION COMPRENANT UN ARTEFACT D'ÉVÉNEMENT, PROCÉDÉ ET SYSTÈME

(30) Priority: 07.09.2021 WO PCT/EP2021/074590
(43) Date of publication of application: 29.05.2024
(73) Proprietor: Siemens Industry Software Netherlands B.V., 3072 AP Rotterdam (NL)
(72) Inventor: HUITING, Jos, 4125 RG Hoef en Haag (NL)
(74) Representative: Siemens Patent Attorneys
(86) International application number: PCT/EP2022/072354
(87) International publication number: WO 2023/036540

(56) References cited:
- US-A1- 2020 326 914
- ANONYMOUS: "docs/extract-and-use-sub-microflows.md at c8525e2dac963564da6869da71c8978de35ff078 . mendix/docs . GitHub", 9 November 2020 (2020-11-09), XP055918402, Retrieved from the Internet <URL:https://github.com/mendix/docs/blob/c8525e2dac963564da6869da71c8978de35ff078/content/howto7/logic-business-rules/extract-and-use-sub-microflows.md> [retrieved on 20220505]
- MARCOS GONÇALO ET AL: "Integrating Microservices with Mendix", 27 September 2018 (2018-09-27), XP055918405, Retrieved from the Internet <URL:https://ww2.mendix.com/rs/729-ZYH-434/images/Integrating%20Microservices%20in%20Mendix%20-%20Mendix%20Community%20Webinar.pdf> [retrieved on 20220505]
- ANONYMOUS: "Event Handlers - Mendix 7 Reference Guide | Mendix Documentation", 16 January 2021 (2021-01-16), XP055918428, Retrieved from the Internet <URL:https://web.archive.org/web/20210116150443/https://docs.mendix.com/refguide7/event-handlers> [retrieved on 20220505]
- ANONYMOUS: "docs/working-with-object-events.md at c8525e2dac963564da6869da71c8978de35ff078 . mendix/docs . GitHub", 30 September 2019 (2019-09-30), XP055918432, Retrieved from the Internet <URL:https://github.com/mendix/docs/blob/c8525e2dac963564da6869da71c8978de35ff078/content/howto7/data-models/working-with-object-events.md> [retrieved on 20220505]

## Description

### Technical field

The present disclosure is directed, in general, to software management systems, in particular systems for developing apps, that may be used to manage, build, test, deploy and iterate such apps (collectively referred to herein as product systems).

### Background

Recently, an increasing number of computer software products is used both for personal needs and for business needs in the form of applications, throughout the present patent document simply called "apps". Such apps may be used in a mobile context as well as on cloud computing platforms and "on premise" and may provide a specific set of functions. The present invention generally relates to the development and the creation of such apps, especially apps comprising event artifacts.

Currently, there exist product systems and solutions which support managing or developing such apps. Such product systems may benefit from improvements.

The document Anonymous: "docs/extract-and-use-sub-microflows.md at c8525e2dac963564da6869da71c8978de35ff078 . mendix/docs . GitHub", 9 November 2020, Retrieved from the Internet: URL:https://github.com/mendix/docs/blob/ c8525e2dac963564da6869da71c8978de35ff078/content/howto7/ logic-business-rules/extract-and-use-sub-microflows.md discloses sub-microflows in the context of the Mendix application development platform.

The document Marcos Gonçalo ET AL: "Integrating Microservices with Mendix", 27 September 2018, Retrieved from the Internet: URL:https://ww2.mendix.com/rs/729-ZYH-434/images/lntegrating %20Microservices%20in%20Mendix%20-%20Mendix%20Community%20Webinar.pdf discloses microservices in the context of the Mendix application development platform.

US 2020/326914 A1 discloses a computer-implemented method of creating an app and a computer system arranged and configured to execute the acts of the computer-implemented method.

The computer-implemented method includes: providing an app development user interface (UI) to a user for developing the app; providing a search UI to the user for searching in a repository for storing artifacts which are reusable for app development; capturing the user's search intent in response to user interactions with the search UI; importing at least one artifact corresponding to the captured user's search intent from the repository to the app development UI; and developing the app through the app development UI by using the imported at least one artifact.

The document Anonymous: "Event Handlers - Mendix 7 Reference Guide Mendix _ Documentation", 16 January 2021, Retrieved from the Internet: URL:https://web.archive.org/web/20210116150443/ https:// docs.mendix.com/refguide7/event-handlers discloses event handlers in the context of the Mendix application development platform.

The document Anonymous: "docs/working-with-object-events.md at c8525e2dac963564da6869da71c8978de35ff078 . mendix/docs . GitHub", 30 September 2019, Retrieved from the Internet: URL:https://github.com/mendix/docs/blob/ c8525e2dac963564da6869da71c8978de35ff078/content/howto7/ data-models/working-with-object-events.md discloses object events in the context of the Mendix application development platform.

### Summary

Variously disclosed embodiments comprise methods and computer systems that may be used to facilitate managing an app.

According to a first aspect of the invention, a computer-implemented method of managing an app comprises
- providing an app development user interface (UI) of an app development platform to a user for developing an app;
- capturing the user's intent to import a respective event artifact from a respective deployed and running producing app to develop the app in response to user interactions with the app development UI;
- importing the respective event artifact corresponding to the captured user's intent to the app development UI;
- developing the app through the app development UI by using the imported respective event artifact;
- deploying and running the developed app on a target device;
- importing event information corresponding to the respective event artifact from the respective producing app to a data storage platform, wherein the respective producing app (124) is deployed and running and includes the event artifact (122), wherein the respective event artifact (122) characterizes an event or a type of event, and wherein the event information (126) includes a specific change of a status when an event is just occurring during the operation of the respective producing app (124);
- verifying the respective event information (126) corresponding to the respective event artifact (122) from the respective producing app (124);
- wherein the importing the respective event information (126) corresponding to the respective event artifact (122) from the respective producing app (124) to the data storage platform (150) is performed only if the respective event information (126) has been verified;
- providing the event information imported to the data storage platform from the data storage platform to the deployed and running app; and
- applying an app algorithm comprised by the deployed and running app on the provided event information to generate output data.

According to a second aspect of the invention, a computer system is arranged and configured to execute the steps of this computer-implemented method of managing an app. In particular, the described computer system is arranged and configured to execute the following steps:
- providing an app development user interface (UI) of an app development platform to a user for developing an app;
- capturing the user's intent to import a respective event artifact from a respective deployed and running producing app to develop the app in response to user interactions with the app development UI;
- importing the respective event artifact corresponding to the captured user's intent to the app development UI;
- developing the app through the app development UI by using the imported respective event artifact;
- deploying and running the developed app on a target device;
- importing event information corresponding to the respective event artifact from the respective producing app to a data storage platform, wherein the respective producing app is deployed and running and includes the event artifact, wherein the respective event artifact characterizes an event or a type of event, and wherein the event information includes a specific change of a status when an event is just occurring during the operation of the respective producing app;
- verifying the respective event information (126) corresponding to the respective event artifact (122) from the respective producing app (124);
- wherein the importing the respective event information (126) corresponding to the respective event artifact (122) from the respective producing app (124) to the data storage platform (150) is performed only if the respective event information (126) has been verified;
- providing the event information imported to the data storage platform from the data storage platform to the deployed and running app; and
- applying an app algorithm comprised by the deployed and running app on the provided event information to generate output data.

According to a third aspect of the invention, a computer program product comprises computer program code which, when executed by a computer system, cause the computer system to carry out this computer-implemented method of managing an app.

According to a fourth aspect of the invention, a computer-readable medium comprises computer program code which, when executed by a computer system, cause the computer system to carry out this computer-implemented method of managing an app. By way of example, the described computer-readable medium may be non-transitory and may further be a software component on a storage device.

In some examples, the mentioned app development platform may be a visual model-based and/or low-code app development platform which is described in more detail below.

The foregoing has outlined rather broadly the technical features of the present disclosure so that those skilled in the art may better understand the detailed description that follows. Additional features and advantages of the disclosure will be described hereinafter that form the subject of the claims. In any case, the invention is set out in the appended set of claims.

Also, before undertaking the detailed description below, it should be understood that various definitions for certain words and phrases are provided throughout this patent document and those of ordinary skill in the art will understand that such definitions apply in many, if not most, instances to prior as well as future uses of such defined words and phrases. While some terms may comprise a wide variety of embodiments, the appended claims may expressly limit these terms to specific embodiments.

### Brief description of the drawings

Figs. 1-8 illustrate a functional block diagram of an example system that facilitates managing an app in a product system, respectively.
Fig. 9-13 illustrate a flow diagram of an example methodology that facilitates managing an app in a product system, respectively.
Fig. 14 illustrates a block diagram of a data processing system in which an embodiment can be implemented.

### Detailed description

Various technologies that pertain to systems and methods for managing apps, especially apps comprising event artifacts, in a product system will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

An app generally refers to a software program which on execution performs specific desired tasks. In general, several apps are executed in a runtime environment containing one or more operating systems ("OSs"), virtual machines (e.g., supporting Java^{™} programming language), device drivers, etc.

Apps, including native apps, can be created, edited, and represented using traditional source code. Examples of such traditional source code comprise C, C++, Java, Flash, Python, Perl, and other script-based methods of representing an app. Developing, creating and managing such script-based apps, or parts of such script-based apps can be accomplished by manual coding of suitably trained users.

Developers often use Application Development Frameworks ("ADFs") (which are by themselves applications or apps) for implementing/developing desired apps. An ADF provides a set of pre-defined code/data modules that can be directly/indirectly used in the development of an app. An ADF may also provide tools such as an Integrated Development Environment ("IDE"), code generators, debuggers, etc., which facilitate a developer in coding/implementing the desired logic of the app in a faster/simpler manner.

In general, an ADF simplifies app development by providing reusable components which can be used by app developers to define user interfaces ("UIs") and app logic by, for example, selecting components to perform desired tasks and defining the appearance, behavior, and interactions of the selected components. Some ADFs are based on a model-view-controller design pattern that promotes loose coupling and easier app development and maintenance.

According to another approach, apps can also be created, edited, and represented using visual model-based representations. Unlike traditional source code implementations, such apps can be created, edited, and/or represented by drawing, moving, connecting, and/or disconnecting visual depictions of logical elements within a visual modeling environment. Visual model-based representations of apps can use symbols, shapes, lines, colors, shades, animations, and/or other visual elements to represent logic, data or memory structures or user interface elements. In order to program a traditional script-based app, programmers are typically required to type out detailed scripts according to a complicated set of programming syntax rules. In contrast, programming a visual model-based app can, in some cases, be done by connecting various logical elements (e.g., action blocks and/or decision blocks) to create a visual flow chart that defines the app's operation. Similarly, defining data structures (e.g., variable types, database objects, or classes) and/or user interface elements (e.g., dropdown boxes, lists, text input boxes) in a visual model-based app can be done by drawing, placing, or connecting visual depictions of logical elements within a virtual workspace, as opposed to typing out detailed commands in a script. Visual-model based apps, including native apps, can therefore be more intuitive to program and/or edit compared to traditional script-based apps. In the present document, an approach is suggested to manage apps, especially to develop an app comprising an event artifact, which may involve the explained visual model-based representations.

For brevity, references to a "model," a "visual model," or an "application" or "app" should be understood to refer to visual model-based apps, including native apps, unless specifically indicated. In some cases, such visual model-based apps can represent complete, stand-alone apps for execution on a computer system. Visual model-based apps can also represent discrete modules that are configured to perform certain tasks or functions, but which do not represent complete apps - instead, such discrete modules can be inserted into a larger app or combined with other discrete modules to perform more complicated tasks. Examples of such discrete modules can comprise modules for validating a ZIP code, for receiving information regarding current weather from a weather feed, and/or for rendering graphics.

Visual models may be represented in two forms: an internal representation and one or more associated visual representations. The internal representation may be a file encoded according to a file format used by a modeling environment to capture and define the operation of an app (or part of an app). For example, the internal representation may define what inputs an app can receive, what outputs an app can provide, the algorithms and operations by which the app can arrive at results, what data the app can display, what data the app can store, etc. The internal representation may also be used to instruct an execution environment how to execute the logic of the app during run-time. Internal representations may be stored in the form of non-human-readable code (e.g., binary code). Internal representations may also be stored according to a binary stored JSON (java script object notation) format, and/or an XML format. At run-time, an execution engine may use an internal representation to compile and/or generate executable machine code that, when executed by a processor, causes the processor to implement the functionality of the model.

The internal representation may be associated with one or more visual representations. Visual representations may comprise visual elements that depict how an app's logic flows, but which are not designed to be compiled or executed. These visual representations may include, for example, flowcharts or decision trees that show a user how the app will operate. The visual models may also visually depict data that is to be received from the user, data that is to be stored, and data that is to be displayed to the user. These visual models may also be interactive, which allows a user to manipulate the model in an intuitive way. For example, visual representations may be configured to display a certain level of detail (e.g., number of branches, number of displayed parameters, granularity of displayed logic) by default. However, users may interact with the visual representation in order to show a desired level of detail-for example, users may display or hide branches of logic, and/or display or hide sets of parameters. Details relating to an element of the visual model may be hidden from view by default but can appear in a sliding window or pop-up that appears on-screen when the user clicks on the appropriate element. Users may also zoom in or out of the model, and/or pan across different parts of the model, to examine different parts of the model. Users may also copy or paste branches of logic from one section of the model into another section, or copy/paste branches of logic from a first model into a second model. In some cases, parts of the model may contain links to other parts of the model, such that if a user clicks on a link, the user will automatically be led to another part of the model. A viewing user may interact with a visual representation in at least some of the same ways that the viewing user might interact with the model if it were displayed within a modeling environment. In other words, the visual representation may be configured to mimic how the model would appear if it were displayed within a visual modeling environment. A single internal representation may correspond to multiple visual representations that use different styles or formatting rules to display app logic. For instance, multiple visual representations corresponding to the same internal representation may differ from one another in their use of color, elements that are comprised or omitted, and use of symbols, shapes, lines, colors, and/or shades to depict logic flow.

Approaches involving the above-described functionalities of visual model-based representations, visual model-based apps, and/or visual models are sometimes understood to be comprised by a so-called low-code development platform. By way of example, such a low-code development platform may further be described as software that provides a development environment used to create application software through graphical user interfaces and configuration instead of traditional hand-coded computer programming. A low-code model may enable developers of varied experience levels to create applications using a visual user interface in combination with model-driven logic. Such low-code development platforms may produce entirely operational apps or require additional coding for specific situations. Low-code app development platforms may reduce the amount of traditional hand coding, enabling accelerated delivery of business apps. A common benefit is that a wider range of people can contribute to the app's development - not only those with formal programming skills. Low-code app development platforms can also lower the initial cost of setup, training, deployment, and maintenance.

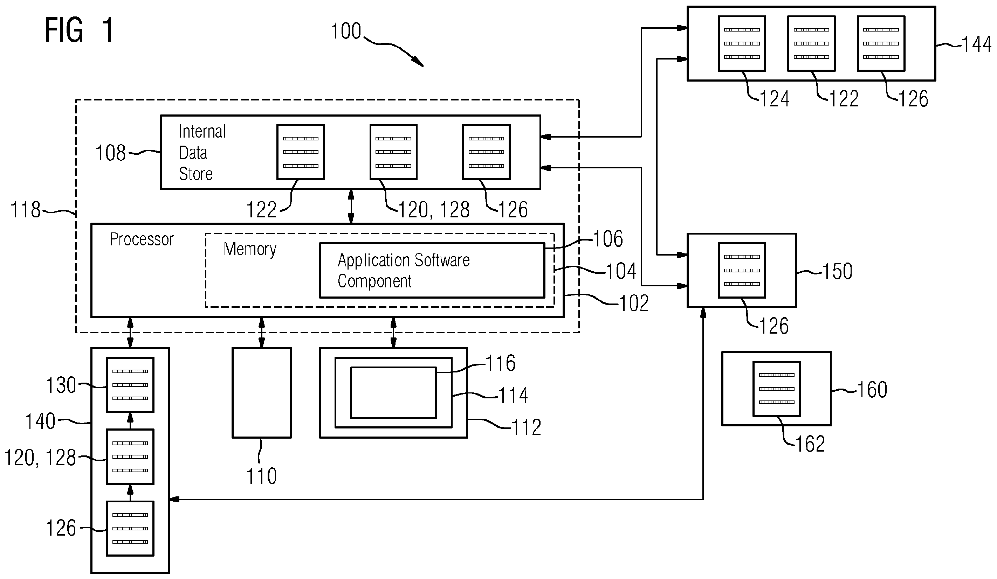

With reference to Fig. 1, a functional block diagram of an example computer system or data processing system 100 is illustrated that facilitates managing apps 120, especially an app 120 comprising an event artifact 122. The processing system 100 may comprise a (visual model-based) app development platform 118 including at least one processor 102 that is configured to execute at least one application software component 106 from a memory 104 accessed by the processor 102. Herein, the app development platform 118 may comprise the above-described functionalities of visual model-based representations, visual model-based apps, and/or visual models and, by way of example, be a visual model-based app development platform or a low-code app development platform. The application software component 106 may be configured (i.e., programmed) to cause the processor 102 to carry out various acts and functions described herein. For example, the described application software component 106 may comprise and/or correspond to one or more components of an app development application that is configured to generate and store product data in a data store 108 such as a database. Furthermore, the described application software component 106 may comprise and/or correspond to one or more components of an app creation or development application.

By way of example, the app development platform 118 may be cloud-based, internet-based and/or be operated by a provider providing app development and creation support, including e.g., supporting low-code and/or visual model-based app development. The user may be located close to the app development platform 118 or remote to the app development platform 118, e.g., anywhere else, e.g., using a mobile device for connecting to the app development platform 118, e.g., via the internet, wherein the mobile device may comprise an input device 110 and a display device 112. In some examples, the app development platform 118 may be installed and run on a user's device, such as a computer, laptop, pad, on-premises computing facility, or the like.

Examples of product systems that may be adapted to comprise the app management and/or development comprising an event artifact features described herein may comprise the low-code software development platform of Mendix Inc., of Boston, Massachusetts, USA. This platform provides tools to build, test, deploy, iterate, develop, create and manage apps 120 and is based on visual, model-driven software development. However, it should be appreciated that the systems and methods described herein may be used in other product systems (e.g., product lifecycle management (PLM), product data management (PDM), application lifecycle management (ALM) systems) and/or any other type of system that generates and stores product data in a database. Also, examples of databases that may be used as one or more data stores described herein comprise database server applications such as Oracle, Microsoft SQL Server, or any other type of data store that is operative to store data records.

It should be appreciated that it can be difficult and time-consuming to manage apps 120, especially to develop an app 120 comprising an event artifact 122, in complex app development and/or management environments. For example, advanced coding or software development or management knowledge of users may be required, or selections of many options need to be made consciously, both involving many manual steps, which is a long and not efficient process.

To enable the enhanced management apps 120, especially the development of an app 120 comprising an event artifact 122, the described product system or processing system 100 may comprise at least one input device 110 and at least one display device 112 (such as a display screen). The described processor 102 may be configured to generate a graphical user interface (GUI) 114 through the display device 112. Such a GUI 114 may comprise GUI elements such as buttons, links, search boxes, lists, text boxes, images, scroll bars usable by a user to provide inputs through the input device 110 that cause developing and, e.g., deploying the app 120. By way of example, the GUI 114 may comprise an app development UI 116 provided to a user for developing the app 120.

In an example embodiment, the application software component 106 and/or the processor 102 may be configured to provide an app development user interface (UI) 116 of an app development platform 118 to a user for developing the app 120.

As mentioned above, the app development platform 118 may comprise the above-described functionalities of visual model-based representations, visual model-based apps, and/or visual models and, by way of example, be a visual model-based app development platform or a low-code app development platform. The app development UI 118 may provide an interactive user interface of the app development platform 118 which supports and enables the user to develop the app 120. By way of example, app 120 may be or comprise a software program which on execution performs specific desired tasks.

In some examples, the application software component 106 and/or the processor 102 may further be configured to capture the user's intent to import a respective event artifact 122 from a respective deployed and running producing app 124 to develop the app 120 in response to user interactions with the app development UI 116.

By way of example, an event may be an action or occurrence recognized by software, e.g., the respective producing app 124 or the app 120 to be developed, often originating asynchronously from the external environment, such as the respective producing app 124, that may be handled by the software. For example, computer events may be generated or triggered by the system, by the user, or in other ways. Events may be handled synchronously with the program flow; that is, the software may have one or more dedicated places where events are handled, frequently an event loop. A source of events may comprise the respective producing app 124, (other) users, machines or devices, who/which may interact with the software, such as the respective producing app 124. Software may sometimes also trigger its own set of events into the event loop, e.g., to communicate the completion of a task. Software that changes its behavior in response to events is said to be event-driven, often with the goal of being interactive. In this context, respective the event artifact 122 is a piece of information characterizing or describing such an event or such a type of event.

Such an event artifact 122 is comprised or produced by other apps, such as the respective producing app 124 which is deployed and running, e.g., on some other device 144. The user may interact with the app development UI 116 to express his or her intent to import the respective event artifact 122 in order to develop the app 120. This may facilitate and speed up the development of the app 120 considerably, especially for users who are non-IT experts, since a large variety of different event artifacts 122 may be available for import and use for developing the app 120. By way of example, an event artifact search UI 136 may be provided to the user via the app development UI 116 allowing the user to search for certain event artifacts 122. Available event artifacts 122 may then be displayed to the user via the event artifacts search UI 136 for selection and the user may select one of the displayed event artifacts 122 for import to the app development UI 116 for purposes of developing the app 120. In some examples, all the available event artifacts 122 may be displayed to the user via the event artifacts search UI 136 for selection and the user may select one of the displayed event artifacts 122 for import for purposes of developing the app 120.

In some examples, the available event artifacts 122 may be stored in a repository 150 of event artifacts 122. Such a repository 150 may, e.g., be provided by GitHub, Inc. of San Francisco, CA, USA. In other examples, the repository 150 of event artifacts 122 may be comprised by the app development platform 118 or the data processing system 100.

It should be appreciated, that in further examples, the application software component 106 and/or the processor 102 may further be configured to import the respective event artifact 122 corresponding to the captured user's intent to the app development UI 116. By way of example, the import may be done by "drag and drop" or by a "dropdown" window in the app development UI 116.

For the import of the respective event artifact 122, e.g., the respective event artifact 122 may be copied to the app development UI 116. In some examples, the import of the respective event artifact 122 may comprise importing metadata of the respective event artifact 122 or the related event information 126 explained in more detail below. Such metadata may comprise information on the origin of the event artifact, such as the respective producing app 124, (other) users, machines or devices. The mentioned metadata may, by way of example, comprise possible statuses which may then change when an event occurs during the operation of the respective producing app 124, such as started, stopped, pending, completed, or information on the possible changes or transitions between statuses. In some examples, the mentioned metadata may comprise information on the type and/or format of the respective event artifact 122 or the related event information 126, such as integers, decimal numbers, text strings, Boolean data, etc. further, more complex or composite information may be used, such as pictures, photos, sound data, etc.

For an example producing app 124 in the retail domain, the respective event artifact 122 may be related to a new purchase order of a customer, wherein the mentioned metadata of the respective event artifact 122 may comprise information on the customer, the vendor, the product, the quantity, the price, the delivery date, etc. In an industrial environment, the producing app 124 may be used to operate or monitor a machine or other device 144, whereby the respective event artifact 122 may be related to a malfunction of the other device 144 which may require a service action. In this environment, the mentioned metadata may comprise a typical regular operation scenario and/or different typical error scenarios of the other device 144, e.g., scenarios of a broken or worn hardware part, of a software bug or IT security issue or the like.

In some examples, the import of the respective event artifact 122 may further comprise connectivity information which may be required to allow for obtaining or retrieving the respective event artifact 122 and/or or the below described event information 126 from the respective producing app 124. Such connectivity information may, by way of example, allow for establishing a communication connection between the respective producing app 124 and (potentially comprising intermediate communication participants, such as the below explained data storage platform 150) eventually the (consuming) app 120.

The import of the respective event artifact 122 may, in some examples, be such that the respective information may be used during the development and/or the creation phase of the app 120 or during the deployment and/or operation of the created app 120.

In further examples, the application software component 106 and/or the processor 102 may further be configured to develop the app 120 through the app development UI 116 by using the imported respective event artifact 122.

Using the imported respective event artifact 122, the app 120 may be developed through the app development UI 116 which may interact, by way of example, with an ADF, an IDE, visual model-based representations or the above-mentioned (low-code) app development platform 118 to accomplish the development of the app 120. Herein, the app development platform 118 together with the respective event artifact 122 may facilitate to support non-expert users to use the respective event artifact 122 to develop the app 120.

By way of example, the application software component 106 and/or the processor 102 may further be configured to deploy and run the developed app 120 on a target device 140.

Herein, an app 120 may be understood as deployed if the activities which are required to make this app 120 available for use by the app user on the target device 140. The app deployment process may comprise several interrelated activities with possible transitions between them. These activities may occur at the producer side (e.g., by the app developer) or at the consumer side (by the app user or end user) or both. In some examples, the app deployment process may comprise at least the release of the app 120 and the installation and the activation of the app 120. The release activity may follow from the completed development process and is sometimes classified as part of the development process rather than deployment process. It may comprise operations required to prepare a system (here: e.g., the app development platform 118 or an on-line app store) for assembly and transfer to the computer system(s) (here: e.g., the app development platform 118) on which it will be run in production. Therefore, it may sometimes involve determining the resources required for the system to operate with tolerable performance and planning and/or documenting subsequent activities of the deployment process. For simple systems, the installation of the app 120 may involve establishing some form of command, shortcut, script or service for executing the software (manually or automatically) of the app 120. For complex systems, it may involve configuration of the system - possibly by asking the end user questions about the intended app use, or directly asking them how they would like it to be configured - and/or making all the required subsystems ready to use. Activation may be the activity of starting up the executable component of software or the app 120 for the first time (which is not to be confused with the common use of the term activation concerning a software license, which is a function of Digital Rights Management systems). Once the app 120 has been deployed on the respective target device 140, the app 120 may be put into operation to fulfill the business needs of the app (end) user.

In some examples, the respective target device 140 may be a smartphone, smartwatch, handheld, pad, laptop or the like, or a desktop device, e.g., including desktop computers, or other "smart" devices, e.g., smart television sets, fridges, home or industrial automation devices, wherein smart television sets may e.g., be a television set with integrated Internet capabilities or a set-top box for television that offers more advanced computing ability and connectivity than a contemporary basic television set.

Further, by way of example, the respective target device 140 may be or comprise a manufacturing operation management (MOM) system, a manufacturing execution system (MES), and enterprise resource planning (ERP) system, a supervisory control and data acquisition (SCADA) system, or any combination thereof.

In some examples, the respective device 140 on which the app 120 may be deployed and run may use the respective event artifact 122 of the respective producing app 124 which may be deployed and run on another device 144. The other device 144 may, in some examples, be or comprise a sensor, an actuator, such as an electric motor, a valve or a robot, an inverter supplying an electric motor, a gear box, a programmable logic controller (PLC), a communication gateway, and/or other parts or components relating to industrial automation products and industrial automation in general. The respective target device 140 may be part of a complex production line or production plant, e.g., a bottle filing machine, conveyor, welding machine, welding robot, etc. In some examples, if the other device 144 belongs to a lower level of the automation pyramid, such as the sensor/actuator or the field level, then the respective target device 140 may belong to a higher level of the automation pyramid, such as field level or the control level.

It should also be appreciated, that in some examples, the application software component 106 and/or the processor 102 may further be configured to import event information 126 corresponding to the respective event artifact 122 from the respective producing app 124 to a data storage platform 150. In some examples, the event information 126 may be considered as live or up-to-date information relating to the respective event artifact 122, whereby the respective event artifact 122 may form the framework for the corresponding event information 126. The event information 126 comprises, corresponding to the above explanations with respect to the respective event artifact 122, a specific change of a status when an event is just occurring during the operation of the respective producing app 124, such as a start, a stop, or a completion.

For the example producing app 124 in the above retail domain example, the event information 126 may be or comprise the information that a specific purchase order of a customer has just been received, processed, stopped, or completed. In some examples, the event information 126 may further comprise information on the specific customer, the specific vendor, the specific product, the specific quantity, the specific price, the specific delivery date, etc. of the specific purchase order. For the example producing app 124 in the above industrial environment example, the event information 126 may be or comprise the information that a specific operation status or a malfunction of the other device 144 has just occurred. In these examples, event information 126 may comprise the information that a production step has been completed or a specific error scenario now applies to the other device 144, e.g., a specific new detection of a broken or worn hardware part, of a software bug or IT security issue or the like.

The import of the event information 126 from the respective producing app 124 to the data storage platform 150 may, in some examples, be done as soon as the event information 126 has been generated by the respective producing app 124. This allows some sort of live or up-to-date information with respect to the event information 126 corresponding to the respective event artifact 122 be generated by the respective producing app 124. In other examples, said import may be done at a given frequency, e.g., once per minute or hour, whereby the respective producing app 124 may then automatically send the event information 126 to the data storage platform 150 or the data storage platform 150 may actively poll the respective producing app 124 for recent event information 126. Further, the import of the event information 126 may be understood as a data transmission of the event information 126 from the respective producing app 124 to the data storage platform 150. By way of example, the explained import of event information 126 from the respective producing app 124 to the data storage platform 150 may be done asynchronously so that the involved communication participants, especially the respective producing app 124 to the data storage platform 150, may only be loosely coupled.

By way of example, the data storage platform 150 may involve Apache Kafka which is an open-source stream-processing software platform developed by the Apache Software Foundation. Apache Kafka provides a unified, high-throughput, low-latency platform for handling real-time data feeds. In some examples, Apache Kafka may be closer, have higher throughput and higher availability than the respective producing app 124 and/or the respective device on which the respective producing app 124 is running. It should be appreciated that importing event information 126 from the respective producing app 124 to a data storage platform 150 may allow for asynchronous communication and a low level of coupling. Therefore, the use of the data storage platform 150 may, in some examples, be particularly advantageous because the data storage platform 150 still allows for communication and import of event information 126 if the respective producing app 124, the respective device on which the respective producing app 124 is running, the (consuming) app 120 and/or the target device 140 are not always available. It should also be appreciated, that in some examples the data storage platform 150 may allow for a partial or complete roll-back of event information 126 in case of data corruption with respect to the event information 126 or if an event relating to the event information 126 has been revoked, rolled-back or the like.

The data storage platform 150 may, e.g., be a cloud-based platform accessible from basically everywhere via the Internet. The data storage platform 150 may, e.g., be hosted by one of the large cloud computing providers including Amazon Web Services, Alibaba, SAP, Google and so on. Alternatively, the data storage platform 150 may be an on-premises platform which may, e.g., involve suitable computation facilities located on the premises of a company managing its artifact information. Hybrid versions or virtual private cloud solutions may also be possible for the data storage platform 150. In some examples, the data storage platform 150 may be comprised by or incorporated in the app development platform 118 or the data processing system 100.

Further, it should be appreciated that the concept of introducing the data storage platform 150 between the producing app 124 and the (consuming) app 120 may, in some examples, be considered as a data broker or a message broker. In some examples, the data storage platform 150 may act as an intermediary computer program module that may translate a message (here the event information 126) from the formal messaging protocol of the sender (here the respective producing app 124) to the formal messaging protocol of the receiver (here the (consuming) app 120). Further, the concept of introducing the data storage platform 150 between the producing app 124 and the (consuming) app 120 may, by way of example, be understood as an architectural pattern for message (here the event information 126) validation, transformation, and routing. It mediates communication among applications (here the respective producing app 124 and the (consuming) app 120), minimizing the mutual awareness that applications should have of each other in order to be able to exchange messages, effectively implementing decoupling.

By way of example, the application software component 106 and/or the processor 102 may further be configured to provide the event information 126 imported to the data storage platform 150 from the data storage platform 150 to the deployed and running app 120.

After the event information 126 has been imported from the respective producing app 124 to the data storage platform 150, the event information 126 may be provided, e.g., transmitted, from the data storage platform 150 to the deployed and running (consuming) app 120.

The provision of the event information 126 from the data storage platform 150 to the (consuming) app 120 may, in some examples, be done as soon as the event information 126 has been imported to the data storage platform 150, in further examples, as soon as the event information 126 has been generated by the respective producing app 124. This allows some sort of live or up-to-date information with respect to the event information 126 corresponding to the respective event artifact 122 be generated by the respective producing app 124. In other examples, said import may be done at a given frequency, e.g., once per minute or hour, whereby the data storage platform 150 may then automatically send the event information 126 to the (consuming) app 120 or the (consuming) app 120 may actively poll the data storage platform 150 for recent event information 126. By way of example, the two communication steps a) from the respective producing app 124 to the data storage platform 150 and b) from the data storage platform to the (consuming) app 120 may be done asynchronously so that the involved communication participants, especially the respective producing app 124 and the (consuming) app 120, may only be loosely coupled.

In some examples, the application software component 106 and/or the processor 102 may further be configured to apply an app algorithm 128 comprised by the deployed and running app 120 on the provided event information 126 to generate output data 130.

The app 120 comprises an app algorithm 128 which, in some examples, corresponds to a given business logic or the app's purpose. The app algorithm 128 may accept the provided event information 126 as input data which is processed according to the app algorithm 128 to generate the output data 130. For the above retail domain example, the app algorithm 128 may accept a new, specific purchase order as input data, and then process this new, specific purchase order to generate the output data 130 which may, e.g., comprise triggering the generation of a bill which may be sent to the purchaser, triggering the assembly of the purchased product or the collection of the purchased product in a storage warehouse. For the above industrial environment example, the app algorithm 128 may accept the new, specific operation status or error or fault message as input data, and then process this new, specific operation status or specific error or fault message to generate the output data 130 which may, e.g., comprise triggering the next production step, a shutdown, a maintenance, or a repair of the other device 144 which may be operated or monitored by the producing app 124.

The suggested approach may offer several advantages comprising that more data sources, such as the repository 150 (or a plurality of repositories) may be comprised which may offer a large number of event artifacts 122 available for reuse by the user for the development, deployment and run of the app 120. Further, the suggested approach may offer more insight in the business or industrial environment where the app 120 may be used. This larger insight may be achieved with event triggers which may be beneficial for automizing and optimizing a sequence of actions and activities which may already be performed in the business or industrial environment, but so far to a larger degree using manual steps or different, potentially independent software applications programs which may cause data or process inconsistencies. Hence, also a higher availability and reliability may be achieved using the suggested approach, e.g., by allowing for asynchronous communication or by distributing computation or communication workload among several apps 120. A further advantage of the suggested approach may be that because of its simplicity it may be available to non-IT experts and, by way of example, to so-called citizen users relying on or preferring low-code app development.

It should also be appreciated that the suggested approach has the charm to hide the complexity of the integration, such as version management or payload management, from the user developing or deploying and running the app 120. At the same time, the suggested approach may even allow for more complexity and managing more complexity in the simple way, e.g., by offering the possibility to combine event artifacts 122 from different producing apps 124 with the business logic or app algorithm 128 embodied in or comprised by the app 120. In some examples, an N-1-communication may conveniently be set up by the user by importing corresponding event artifacts 122 from different producing apps 124 or from different other devices 144 on which the same or different producing apps 124 are running. In further examples, even an N-N-communication may be realized by the user by developing two or more (different) (consuming) apps 120 to which corresponding event artifacts 122 may be imported from different producing apps 124 or from different other devices 144 on which the same or different producing apps 124 are running. Also, the suggested approach may allow for new types of complex or processes and may simplify many processes, e.g., by now avoiding approval emails.

In some examples, the application software component 106 and/or the processor 102 may further be configured to cause to display the generated output data 130 to a user of the target device 140 via a user interface 142 of the target device 140.

To this end, the target device 140 may comprise the user interface 142 which may, e.g., be displayed on a display device (such as a display screen) of the target device 140. In this context, the target device 140 may, e.g., be embodied by a smart phone, or an industrial automation product, such as a PLC, an inverter, or a part of a complex production line or production plant, e.g., a bottle filing machine, conveyor, welding machine, welding robot, etc.

The generated output data 130 may be displayed to an (end) user of the target device 140 via the user interface 142 thus enabling, e.g., that this user triggers further actions, such as triggering the next production step, a shutdown, a maintenance or a repair of target device 140 or another device 144 which is connected to the target device 140.

The respective target device 140 may be caused or triggered, e.g., by the app development platform 118 or by the deployed and running app 120, to display the generated output data 130.

In further examples, the application software component 106 and/or the processor 102 may further be configured to cause to use the generated output data 130 for analyzing, monitoring, operating and/or controlling the target device 140 or another device 144 connected to the target device 140 and/or to cause to analyze and/or monitor the respective target device's 140 user using the generated output data 130.

The respective target device 140 or the other device 144 may be analyzed, monitored, operated and/or controlled using the generated output data 130. In some examples, the actions of analyzing, monitoring, operating and/or controlling the target device 140 or the other device 144 may be performed by the app development platform 118, the target device 140 or the other device 144. Hence, for example, the app development platform 118 may monitor or control the target device 140 or the other device 144. Further, by way of example, the target device 140 may analyze or control the other device 144. This may, in some examples, be enabled by a suitable event artifact 122 and corresponding suitable event information 126 which may comprise data and information which may be useful or required for analyzing, monitoring, operating and/or controlling the target device 140 or the other device 144.

By way of example, the app development platform 118 or the target device 140 may be caused or triggered, e.g., by the app development platform 118 or by the deployed and running app 120, to analyze, monitor, operate and/or control the target device 140 or the other device 144.

It should also be appreciated, that in some examples the producing app 124 is deployed and running on the other device 144 and that the other device 144 may be analyzed, monitored, operated and/or controlled by the app development platform 118 or the target device 130 using the generated output data 130.

In further examples, the app development platform 118 or the target device 140 may also be caused or triggered, e.g., by the app development platform 118 or by the deployed and running app 120, to analyze and/monitor the target device's 140 user using the generated output data 130. In such more exotic examples, the target device 140 may be or comprise a smartphone, smartwatch, handheld, pad, laptop or the like and the other device 144 may be a human, e.g., the end user of the respective target device 140, or an animal or a plant, wherein the human's, the animal's or the plant's health, behavior, etc. may be analyzed or monitored using the app 120. In some examples, the mentioned steps may directly be performed by the app development platform 118.

It should also be appreciated, that in some examples, the respective event artifact 122 may comprise at least one event notification and/or at least one event-carried state transfer.

In the context of event notifications and event-carried state transfers, reference is made to the website https://martinfowler.com/articles/201701-event-driven.html.

In some examples, an event notification may occur when a system (here the producing app 124 or the data storage platform 150) sends event messages (here the event information 126) to notify other systems (here the data storage platform 150 or the (consuming) app 120) of a change in its domain. A key element of event notification may be that the source system may not expect any response to the sent message. By way of example, if the recipient of the event notification replies, there may be a marked separation between the logic flow that sends the event and any logic flow that responds to some reaction to that event. The approach of event notifications may be advantageous since it may imply a low level of coupling between the producing app 124 on one hand and the data storage platform 150 or the (consuming) app 120 on the other hand.

By way of example, an event-carried state transfer may be used to update a client (here the data storage platform 150 or the (consuming) app 120) of a system in such a way that the client does not need to contact the source system (here the producing app 124 or the data storage platform 150) in order to do further work. E.g., a customer management system might send out events whenever a customer changes its details (such as an address) with events that contain details of the data that changed. A recipient can then update its own copy of customer data with the changes, so that it never needs to talk to the main customer system to do its work in the future. The approach of event-carried state transfers may allow for greater resilience since the recipient systems may function if the customer system is or becomes unavailable. Latency may be reduced, as there may be no remote call required to access customer information which may also imply that communication workload may be reduced. Thanks to the use of the data storage platform 150, the challenge of maintaining all the states up-to-date may be met so that it may not be necessary anymore to actively call the sender for more information when needed.

Further, the respective event artifact 122 comprising an event notification or an event-carried state transfer may be understood such that the respective event artifact 122 may comprise a piece of information characterizing or describing an event notification, an event-carried state transfer or such types of information. The specific event notification or event-carried state transfer, e.g., relating to a specific operation or error scenario, such as scenarios of a broken or worn hardware part, of a software bug or IT security issue or the like, may correspond to the event information 126.

In some examples, the respective event artifact 122 may comprise a respective event channel 132 comprising at least one event artifact 122 from the respective deployed and running producing app 124.

The event channel 132 may, in some examples, be understood as a bundle of correlated event artifacts 122, wherein this bundle of correlated event artifacts 122 may again be an event artifact 122. In some software architectures, the event channel 132 may be similar to a topic. The use of event channels 132 may, e.g., facilitate to import event artifacts 122 for app development purposes or may facilitate routing event information 126 from the respective producing app 124 to the data storage platform 150 and eventually to the (consuming) app 120. It should be appreciated, that in some examples, creating such an event channel 132 may facilitate to collect and manage correlated event artifacts 122 and event information 126.

For the above retail domain example, an event channel 132 may bundle all orders related to one (or more) specific product(s) or all information related to one (or more) specific purchaser(s), such as purchases, billing and shipping information. For the above industrial environment example, an event channel 132 may bundle all events related to one (or more) specific machine(s) or device(s), or all information related to the occurrence of one (or more) specific error scenario(s).

In some examples, the respective event channel 132 may comprise the above-explained event notifications and/or event-carried state transfers. In further examples, the respective event channel 132 may comprise only one or more event notification(s). And in other examples, the respective event channel may comprise one or more event-carried state transfer(s). Herein, in some cases, using only one event-carried state transfer may be advisable since it may facilitate to keep track of the latest state. Nonetheless, in other cases two or more event-carried state transfers may be used, e.g., to keep track of events or state transfers which relate to the same topic, such as a specific purchaser, but which may not interfere with each other, such as an order status change and a billing information change with respect to this specific purchaser.

By way of example, the respective event channel 132 may be defined or managed by the developer or user of the respective producing app 124. The user developing or running the (consuming) app 120 may then import the respective event channel 132 during the app development and consume the information provided by the respective event channel 132 during the run of the (consuming) app 120.

In further examples, the respective event channel 132 may further comprise at least one event artifact 122 from the deployed and running producing app 124 and at least one event artifact 122' from at least one second deployed and running producing app 124'.

Creating such an event channel 132 may facilitate to collect and manage correlated event artifacts 122, 122' and event information 126, 126' originating from different producing apps 124, 124' and/or from different other devices 144, 144' on which the respective producing app 124, 124' may be deployed and run. The concept of event channels 132 may allow to manage more complex scenarios, but since also event channels 132 may be imported by the user to develop the app 120, this complexity may still conveniently be handled by non-IT experts developing the app 120.

To this end, in some examples, the same or different producing app(s) 124, 124' may be deployed and run a) on the same other device 144, but e.g., in different software environments of the other device 144, and/or b) on different other devices 144, 144'. Then, in some examples, for each producing app 124, 124' deployed and running in a respective, productive software environment (either on the same other device 144 or different other devices 144, 144'), a respective event channel 132 may be set up. Further, in some examples, the event artifacts 122 of two or more of these producing apps 124, 124' may be combined into a combined event channel 132.

As already mentioned above, the event channel 132 may, in some examples, be defined or managed by the developer or user of the respective producing app 124, 124'. The user developing or running the (consuming) app 120 may then import the respective event channel 132 during the app development and consume the information provided by the respective event channel 132 during the run of the (consuming) app 120.

It should also be appreciated that in some examples, upon an amendment of the producing app 124, the application software component 106 and/or the processor 102 may further be configured to display at least two options 134 to the user corresponding to a continued use of the respective event artifact 122 of the original producing app 124 or a started use of the respective amended event artifact 122 of the amended producing app 124''; to capture the user's intent to select one of the displayed options 134; and if the user selects to start using the respective event artifact 122 of the amended producing app 124": to import event information 126 corresponding to the respective event artifact 122 from the respective amended producing app 124" to the data storage platform 150.

The developer of the respective producing app 124 may, by way of example, may make amendments to the respective producing app 124, e.g., by amending the respective producing app's 124 input parameters or sources, business logic, and/or output parameters or targets. To this end, the developer of the respective producing app 124 may re-enter the development stage, make corresponding amendments and create a respective amended producing app 124''. Once such a respective amended producing app 124'' has been developed, it may be deployed and run on the respective device 144. Such amendments may, by way of example, also affect the event artifact(s) 122 which may be generated as an output of the respective producing app 124. Accordingly, a respective amended event artifact 122" and - if applicable - respective amended event information 126" may be generated as an output of the respective amended producing app 124". The amended event artifact 122" and - if applicable - respective amended event information 126", may e.g., differ from the original event artifact 122 and - if applicable - the respective event information 126 in their respective type and/or format.

It should be appreciated that upon an amendment of the producing app 124, at least two options 134 may be displayed to the user, whereby the user may be the developer of the app 120 or the user of the deployed and running app 120. The options 134 may be displayed to the respective user, e.g., to the developer via the app development UI 116 or to the user of the deployed and running app 120 via the user interface 142 of the target device 140. The available and displayed options 134 may comprise continuing to use the respective event artifact 122 of the original producing app 124 or starting to use the respective (if applicable: amended) event artifact 122(") of the respective amended producing app 124".

This user may then select one of the displayed options 134, e.g., by interacting with the respective user interface: the app development UI 116 for the developer the user interface 142 of the target device 140 for user of the deployed and running app 120. In some examples, if the user selects to start using the respective (if applicable: amended) event artifact 122(") of the respective amended producing app 124", event information 126 corresponding to the respective (if applicable: amended) event artifact 122('') may be imported from the respective amended producing app 124" to the data storage platform 150. This event information 126 may then be provided from the data storage platform 150 to the deployed and running app 120.

In some examples, the developer or user of the respective producing app 124, 124" may need to check or make sure that useful event artifacts 122, 122" and/or event information 126, 126" may still be provided to consuming apps 120. This may, in some examples, concern the content, type or format of the event artifacts 122, 122" and/or event information 126, 126''. In further examples, the developer or user of the respective producing app 124, 124" may need to indicate that an amendment has been made to the respective producing app 124 and provide the offer or choice to select at least between the two options 134: a) the continued use of the respective event artifact 122 of the original producing app 124 or b) the started use of the respective amended event artifact 122 of the amended producing app 124". In yet further examples, the app development platform 118 may determine an amendment of the respective producing app 124 and provide the mentioned options 134 to the user of the app 120, whereby this user may be the developer of the app 120 or the user of the deployed and running app 120.

It should further be appreciated that in some examples, if the user selects to start using the respective event artifact 122 of the respective amended producing app 124'' which is incompatible with the respective event artifact 122 of the respective producing app 124, the application software component 106 and/or the processor 102 may further be configured to import the respective event artifact 122 of the respective amended producing app 124" to the app development UI 116; to develop the app 120 through the app development UI 116 by using the imported respective event artifact 122 of the respective amended producing app 124"; and to deploy and run the developed app 120 on the target device 140.

In some examples, a determination is performed whether the respective event artifact 122 of the respective amended producing app 124" may still be compatible with the respective event artifact 122 of the respective (original) producing app 124. This determination may, e.g., take into account the content, type or format of the event artifacts 122, 122" and/or event information 126, 126''. If the respective event artifact 122 of the respective amended producing app 124" is incompatible with the respective event artifact 122 of the respective (original) producing app 124, the respective event artifact 122 of the respective amended producing app 124" may be imported to the app development UI 116. The app 120 may then be updated by (re-)developing the app 120 through the app development UI 116 by using the imported respective event artifact 122 of the respective amended producing app 124''. The updated app 120 may then be deployed and run on the target device 140.

Updating the app 120 may, in some examples, contribute to increase the availability, reliability and resilience of the app 120 comprising an event artifact 122.

In some examples, the application software component 106 and/or the processor 102 may further be configured to provide an event artifacts search UI 136 to the user for searching in a repository 152 for storing event artifacts 122 which are usable for app development.

In some examples, the repository 150 of available event artifacts 122 may be provided by GitHub, Inc. of San Francisco, CA, USA. In other examples, the repository 150 of event artifacts 122 may be comprised by the app development platform 118 or the data processing system 100. The repository 150 may be searched by the user developing the app 120 for event artifacts 120 to which are available in the repository 150, and which may relate or comply with the user's business needs or which may simplify or speed up developing the app 120. If available, at least one suitable event artifact 122 which is available in the repository 150 may be displayed via the event artifact search UI 136 to the user for selection. The user may then interact with the event artifact search UI 136 to make a selection and indicate his or her intent to import (one of) the displayed event artifact(s) 122 and use this event artifact 122 for his or her app development.

In some examples, the application software component 106 and/or the processor 102 may further be configured to store information relating to the generated output data 130 as an event artifact 122 in a repository 152 of event artifacts 122 which are reusable for app development.

By way of example, the repository 152 may be the repository 152 explained above. The information to be stored in the repository 152 may relate to the output data 130 generated by the app algorithm 128 or the app 120, whereby the output data 130 may be processed, abstracted, or generalized such that the output data 130 is suitable for reuse as an event artifact 122 for developing further apps. Such a generalization of the output data 130 may, in some examples, comprise extracting the content, type or format of the output data 130 which may be generated by the app algorithm 128 or the app 120. Hence, the event artifact 122 derived from the output data 130 may, in some examples, not comprise specific values or results of output data 130, but rather reflect the content, type or format that the output data 130 may have.

In further examples, the output data 130, esp. specific values or results of output data 130, may be provided to other apps (e.g., via the data storage platform 150) as corresponding event information 126.

The suitable processing, abstraction or generalization of the output data 130 allowing for reuse of the output data 130 as an event artifact 122 may, in some examples, be defined or managed by the developer or user of the app 120. The user developing or running another app which may consume this event artifact 122 may then import this event artifact 122 during the app development and consume the information provided by the app 120 during the run of the other app.

In some examples, the output data 130 may only be stored as an event artifact 122 in the repository 152 if the app 120 has successfully been deployed and run on the target device 140 and optionally if the generated output data 130 has been verified. The verification of the generated output data 130 may, e.g., comprise a successful comparison of the generated output data 130 with expected output data 130 or with an expected event artifact 122 (or optionally expected event information 126), compared with similar scenarios, respectively. The comparison may, by way of example, take into account the content, type or format of the output data 130 or the event artifact 122(or optionally the expected event information 126), respectively. The event artifact 122 which has been stored in the repository 152, may then be searchable in the repository 152 and be imported for developing other apps 120, e.g., by other users.

It should also be appreciated that in further examples, the application software component 106 and/or the processor 102 may further be configured to store a) an event artifact 122 from a third-party app or b) information relating to the generated output data 130 from a third-party app an event artifact 122 in a repository 152 of event artifacts 122 which are reusable for app development. By way of example, the event artifact 122 from the third-party app or the information relating to the generated output data 130 from the third-party app may be processed, abstracted, or generalized such that the event artifact 122 or the information from the third-party app is suitable for reuse as an event artifact 122 for developing further apps.

In further examples, the application software component 106 and/or the processor 102 may further be configured to verify the respective event information 126 corresponding to the respective event artifact 122 from the respective producing app 124; and to import the respective event information 126 corresponding to the respective event artifact 122 from the respective producing app 124 to the data storage platform 150 only if the respective event information 126 has been verified.

The verification of the respective event information 126 may, e.g., comprise a successful comparison of the respective event information 126 with respective expected event information 126, e.g., by comparing with similar scenarios. The comparison may, by way of example, take into account the content, type or format of the respective event information 126 or specific values or results of the respective event information 126. It should also be appreciated, that in some examples, the verification may comprise checking if the event which underlies the respective event information 126 has successfully been completed, i.e., for example, that the event has not been rolled back or revoked. In some examples, this check of a successful completion of the event may comprise that the respective event information 126 may only be verified after a given period of time after which a roll-back or a revocation of the event may become sufficiently unlikely or may be ruled out. In further examples, the check of a successful completion of the event may comprise confirming the successful completion of the event by a second, independent data source, e.g., a user or a different app who/which may confirm the successful completion of the event.

In some examples, the verification of the respective event information 126 may be supported by write-ahead logging (WAL), a method for ensuring data integrity. Briefly, WAL's central concept is that changes to data files (where tables and indexes reside, e.g., the respective event information 126) must be written only after those changes have been logged, that is, after log records describing the changes have been flushed to permanent storage. This approach may allow in the event of a crash of the producing app 124 or optionally the data storage platform 150 to recover the data lost because of the crash using the log: any changes that have not been applied to the data pages can be redone from the log records.

In some examples, the respective event information 126 may only be imported from the respective producing app 124 to the data storage platform 150 if the respective event information 126 has been verified. I.e., in these examples, if the respective event information 126 has not (yet) been verified, the respective event information 126 may not (yet) the imported from the respective producing app 124 to the data storage platform 150.

As illustrated in Fig. 1, the (consuming) app 120 together with the comprised app algorithm 128 may be stored in the data store 108 of the app development platform 118. Further, the artifact information 122 and optionally, the event information 126 may be stored in the data store 108. Herein, the event artifact 122 may be used for the purposes of developing the app 120 supported by the app development platform 118. The app 120 may, by way of example, be deployed and run on the target device 140. The event information 126 corresponding to the event artifact 122 may originate from the producing app 124 deployed and running on the other device 144. The event information 126 may first be imported from the producing app 124 to the data storage platform 150 which may then provide the event information 126 to the app 120 deployed and running on the target device 140. This provision of the event information 126 from the data storage platform 150 may either be done directly from the data storage platform 150 to the (consuming) app 120 deployed and running on the target device 140 or it may be done with an intermediate step comprising the app development platform 118 so that the event information 126 may first be provided from the data storage platform 150 to the app development platform 118 and then from the app development platform 118 to the (consuming) app 120 deployed and running on the target device 140.

The target device 140 may apply the app algorithm 128 during the run of the app 120 on the provided event information 126 to generate the output data 130.

It should be appreciated that the described the application software component 106 and/or the processor 102 may carry out an analogous method of managing an app 120, especially developing an app 120 comprising an event artifact 122.

Further, a computer-readable medium 160 which may comprise a computer program product 162 is shown in Fig. 1, wherein the computer program product 162 may be encoded with executable instructions, that when executed, cause the computer system 100 or and/or the app development platform 118 to carry out the described method.

In some examples, the suggested method may include model-based app development during which a model may be used which may describe or characterize the app 120 to be created and/or functionalities of the app 120 to be created. Analogously, the respective deployed and running producing app 124 may include a respective model which may be different from the model of the app 120 to be created. By way of example, the respective model may include the above-mentioned, respective event artifact 122, the event information 126 or more generally information objects, wherein these event artifacts 122 or information objects may have certain properties. Further the model may be included or represented by the app algorithm 128. This model may include, e.g., pages of the app, wherein the pages may serve to display information, such as the respective event artifact 122 or the information objects 140 or information derived from the information objects 140, such as the event information 126 to an app user. In further examples, this model may include workflows, e.g., routines for processing data related to the event artifacts 122, the event information 126 or the information objects or for interacting with the app user. In some examples, the workflows create relations or pointers between the event artifacts 122, the event information 126 or the information objects 140 which are part of the model. This model may, by way of example, include a metamodel which may describe the properties of elements, wherein objects are instances of elements and wherein these objects may be included in the above-mentioned the event artifacts 122, the event information 126 or the information objects 140.

Here is an example metamodel describing the properties of an element:

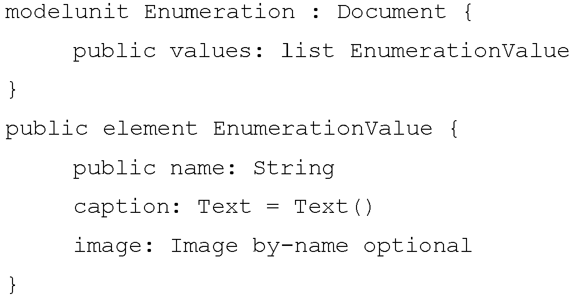

An enumeration is a document that consists of a number of EnumerationValues and each value has a name, a caption described by a Text object and refers to an image by name.

There may be four kinds of properties:
1. Primitive value property: the property value is of a primitive type such as integer or string. See 'name' in the example above.
2. Primitive list property: the property value is a list of values of primitive type. For example, a list of widths of columns.
3. Object value property: the property value is a contained object. See 'caption' in the example above. A Text object represents a translatable text and in turn contains other objects that list the translations.
4. Object list property: the property contains a list of contained objects. See 'values' in the example above.

Model-based app development and taking the model into account for developing an app comprising an event artifact 122 may offer various advantages. This model may, e.g., include a domain model which may, e.g., be understood as an abstracted relational database, e.g., based upon standard UML notation and object-oriented principles. In other words, the domain model may be a visual representation of the data that the app 120 or the respective deployed and running producing app 124 includes or consists of. Such a visual approach to application development is particularly advantageous since it allows for building apps 120 with agility and for quickly building and growing an app 120 over time. The domain model may, by way of example, include or consist of three main elements: entities which represent objects, attributes which assign properties and values to the entities, and associations which allow entities to communicate with one another. The associations may, by way of example, be equivalent with the above-mentioned pointers.

The structure of the model or the domain model may determine what the database for storing the event artifacts 122, the event information 126, the information objects, the model and/or the domain model will look like. Each entity may become a database table, and each attribute may become a column in the database. Every object stored in the database (for example, a training course) may become a row in the corresponding database table. This may imply that if something is not in the domain model, it can't be added to the database.

By way of example, a database table for an entity "Training Course" with these attributes

| Training Course |
|---|
| Title |
| Duration |
| Price |

may look like this when several training events for this training course may be scheduled:

| ID | Title | Duration | Price |
|---|---|---|---|
| ... | ... | ... | ... |

Herein, ID is not an attribute, but may be the unique identifier mentioned above. The unique identifier may make sure that every object, e.g. the event artifacts 122, the event information 126 or the information object, always has a unique identifier (an ID) so that the system knows which object it is.

Changes to the model and/or the domain model may be made as often as desired, and the database will synchronize when the app 120 is published again. E.g., when the name of an entity or attribute or generally an information object is changed, the app 120 will still work, thanks to the corresponding unique identifier.

As mentioned above, the model may include a visual representation of the data that the app 120 includes or consists of. This means, e.g., that the model may include all information characterizing the functionalities of the app 120 to be created. Hence, the model may be considered as one of the most important work results and core intellectual property of the user(s) developing the app. Therefore, it is very important to protect the model and to make sure not to "break" the model when importing the respective event artifact 122 /and or the event information 126 to the app development UI 116 and optionally into the model or the algorithm 128 of the app 120.

So, in a nutshell, the suggested method may, e.g., include model-based app development which may include at least one the following features or any combination thereof:
- the app 120 to be created may include at least a part of a first model, wherein the first model characterizes the app 120 to be created and/or functionalities of the app 120 to be created,
- wherein the first model may optionally include at least one of entities, attributes which assign properties and values to the entities, and associations which allow entities to communicate with one another, or any combination thereof, wherein the entities represent the event artifacts 122, the event information 126 or information objects,
- wherein the first model may optionally include workflows for processing data related to the event artifacts 122, the event information 126, the information objects or pages of the app 120,
- wherein the pages may optionally serve to display the event artifacts 122, the event information 126 or the information objects or information derived from the event artifacts 122, the event information 126 or the information objects to an app user.
Optionally the respective deployed and running producing app 124 may, e.g., further include at least a part of a second model, wherein the second model may optionally have at least in part have properties or an architecture similar to the first model, and wherein the first model may optionally be at least in part different from the second model.

In some examples of in which the suggested method includes model-based app development, the respective deployed and running producing app 124 and the app 120 to be created may be understood as distributed apps which may, e.g., include different models. So, in a way, the suggested development of the app 120 may involve modeling distributed applications.

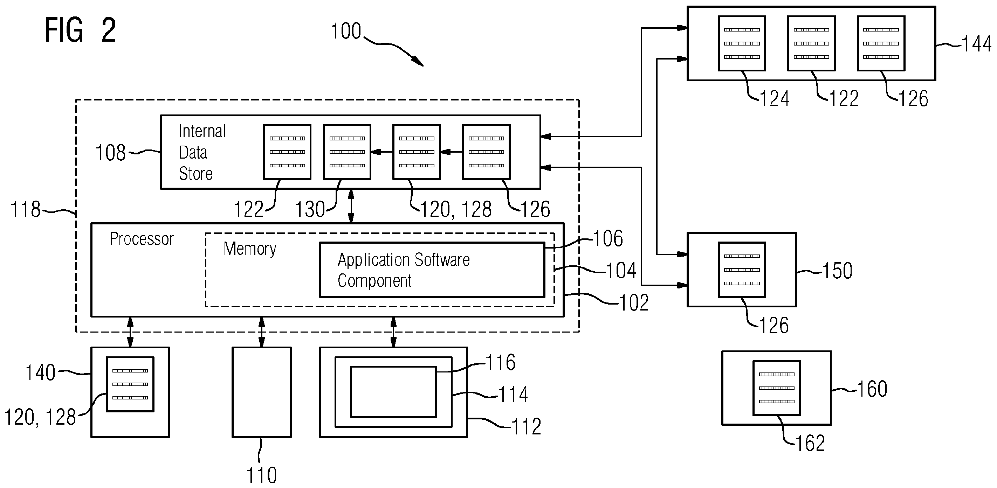

With reference to Fig. 2, a functional block diagram of another example computer system or data processing system 100 is illustrated that facilitates managing apps 120, especially an app 120 comprising an event artifact 122.

As illustrated in Fig. 2, the app 120 may be deployed and run on the target device 140 and the app development platform 118 supports running the app 120 on the target device 140. The event information 126 may be imported from the producing app 124 to the data storage platform 150 which may then provide the event information 126 to the app 120. In this case, the event information 126 may be provided to the app development platform 118 which may then apply the app algorithm 128 during the run of the app 120 on the provided event information 126 to generate the output data 130.

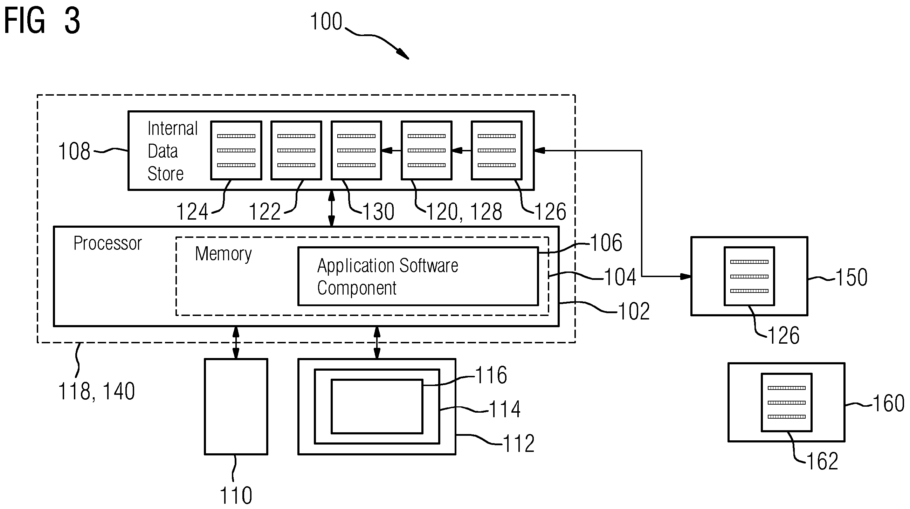

With reference to Fig. 3, a functional block diagram of a further example computer system or data processing system 100 is illustrated that facilitates managing apps 120, especially an app 120 comprising an event artifact 122.

As illustrated in Fig. 3, both the producing app 124 and the (consuming) app 120 are deployed and run on the app development platform 118. Nonetheless, the event information 126 may be imported from the producing app 124 (running on the app development platform 118) to the data storage platform 150 which may then provide the event information 126 to the app 120 (also running on the app development platform 118).

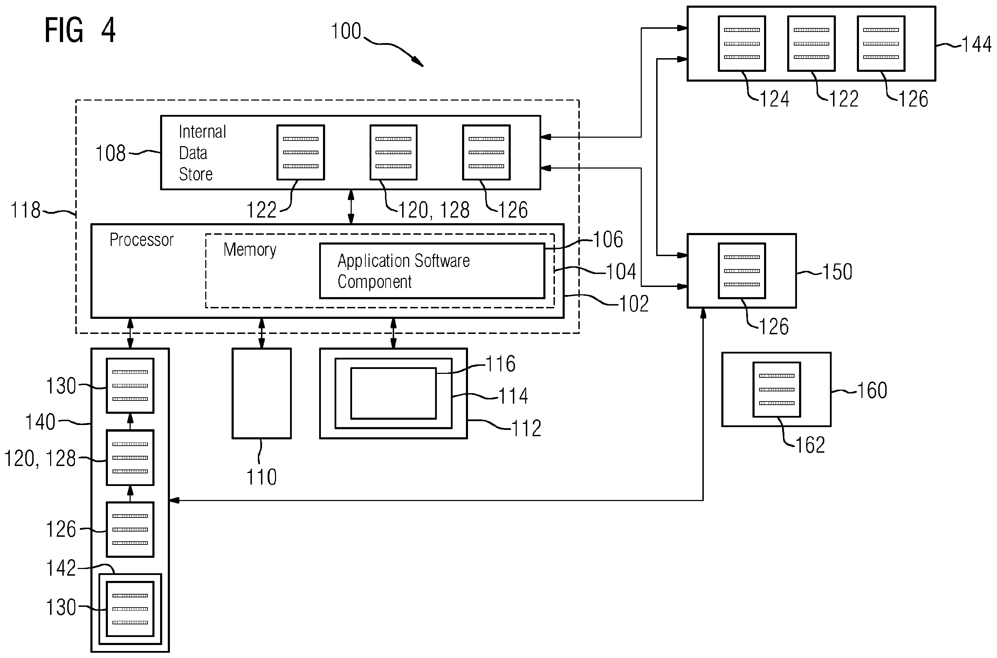

With reference to Fig. 4, a functional block diagram of yet another example computer system or data processing system 100 is illustrated that facilitates managing apps 120, especially an app 120 comprising an event artifact 122.

As illustrated in Fig. 4, the event information 126 may first be imported from the producing app 124 to the data storage platform 150 which may then provide the event information 126 to the app 120 deployed and running on the target device 140 via an intermediate step comprising the app development platform 118 so that the event information 126 may first be provided from the data storage platform 150 to the app development platform 118 and then from the app development platform 118 to the (consuming) app 120 deployed and running on the target device 140. In some examples, the provision of the event information 126 from the data storage platform 150 may also be done directly from the data storage platform 150 to the (consuming) app 120 deployed and running on the target device 140.

The target device 140 may apply the app algorithm 128 during the run of the app 120 on the provided event information 126 to generate the output data 130. The generated output data 130 may then be displayed to a user of the target device 140 via a user interface 142 of the target device 140, e.g., via a display device comprised by the target device 140.

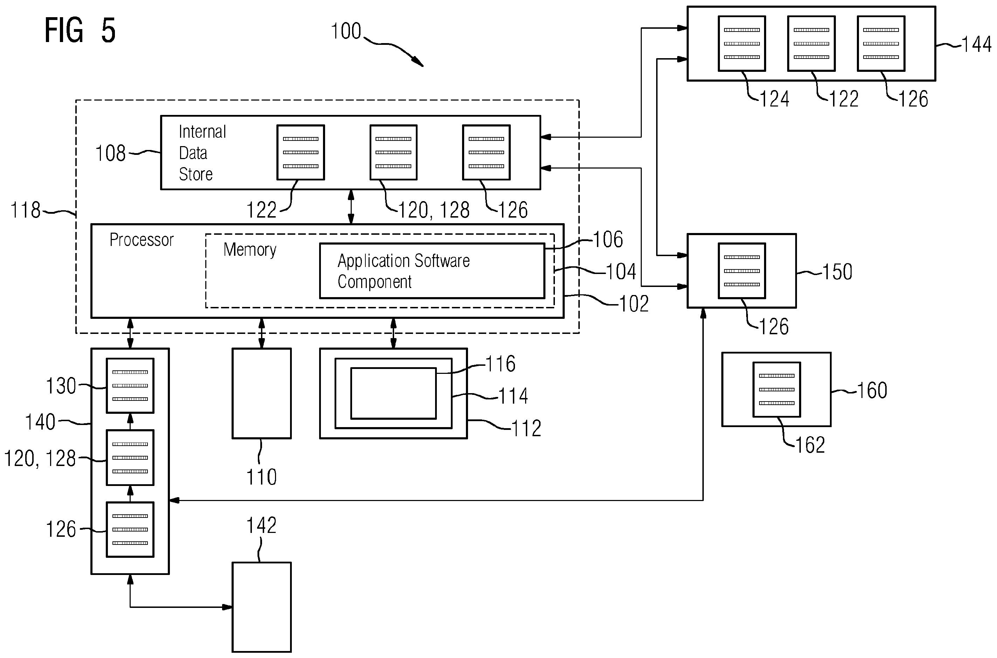

With reference to Fig. 5, a functional block diagram of yet another example computer system or data processing system 100 is illustrated that facilitates managing apps 120, especially an app 120 comprising an event artifact 122.

As illustrated in Fig. 5, the user interface 142 for displaying the generated output data 130 may also be external to the target device 140. In some examples, the user interface 142 may be comprised by a further device, such as an external display screen, a PLC, laptop, etc. The target device 140 may be communicatively coupled with the further device so that the further device may display the output data 130 generated by the app 130 running on the target device 140. To this end, the target device 140 may transmit the generated output data 130 to the further device.

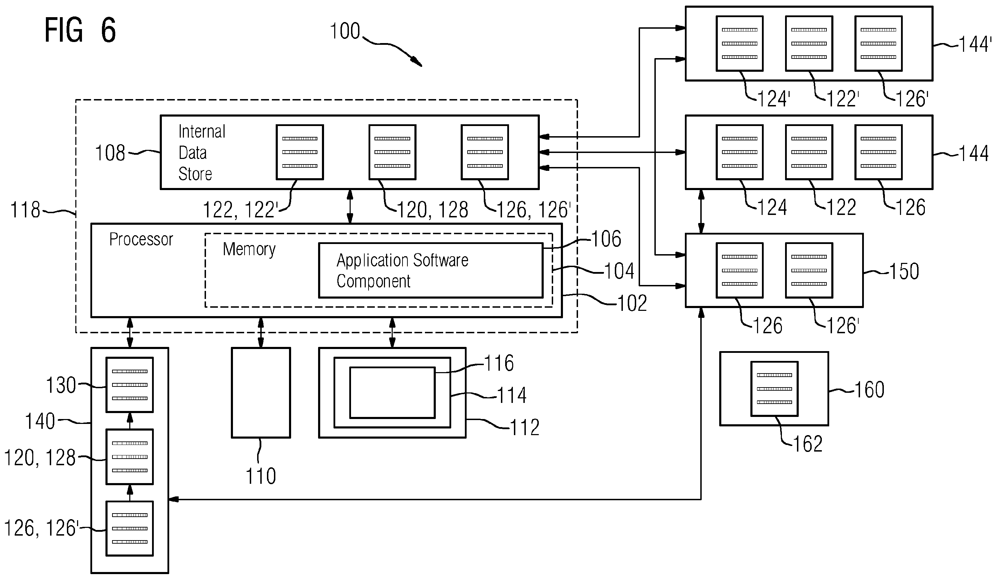

With reference to Fig. 6, a functional block diagram of yet another example computer system or data processing system 100 is illustrated that facilitates managing apps 120, especially an app 120 comprising an event artifact 122.

As illustrated in Fig. 6, there may be two producing apps 124, 124' which may be deployed and run on the two devices 144, 144' and which may provide a respective event artifact 122, 122' and respective event information 126, 126'. The (consuming) app 120 together with the comprised app algorithm 128 may be stored in the data store 108 of the app development platform 118. Further, the two sets of artifact information 122, 122' and optionally, the two sets of event information 126, 126' may be stored in the data store 108. Herein, the two sets of event artifact 122, 122' may be used for the purposes of developing the app 120 supported by the app development platform 118. The app 120 may, by way of example be deployed and run on the target device 140. The two sets of event information 126, 126' corresponding to the two sets of event artifacts 122, 122' may originate from the respective producing app 124, 124' deployed and running on the respective other device 144, 144'. The respective event information 126, 126' may first be imported from the respective producing app 124, 124' to the data storage platform 150 which may then provide the respective event information 126, 126' to the app 120 deployed and running on the target device 140. This provision of the respective event information 126, 126' from the data storage platform 150 may either be done directly from the data storage platform 150 to the (consuming) app 120 deployed and running on the target device 140 or it may be done with an intermediate step comprising the app development platform 118 so that the respective event information 126, 126' may first be provided from the data storage platform 150 to the app development platform 118 and then from the app development platform 118 to the (consuming) app 120 deployed and running on the target device 140.

The target device 140 may apply the app algorithm 128 during the run of the app 120 on the provided two sets of event information 126, 126' to generate the output data 130.

It should be appreciated, that in some examples, the two sets of artifact information 122, 122' may be bundled using the above-explained event channel 132.

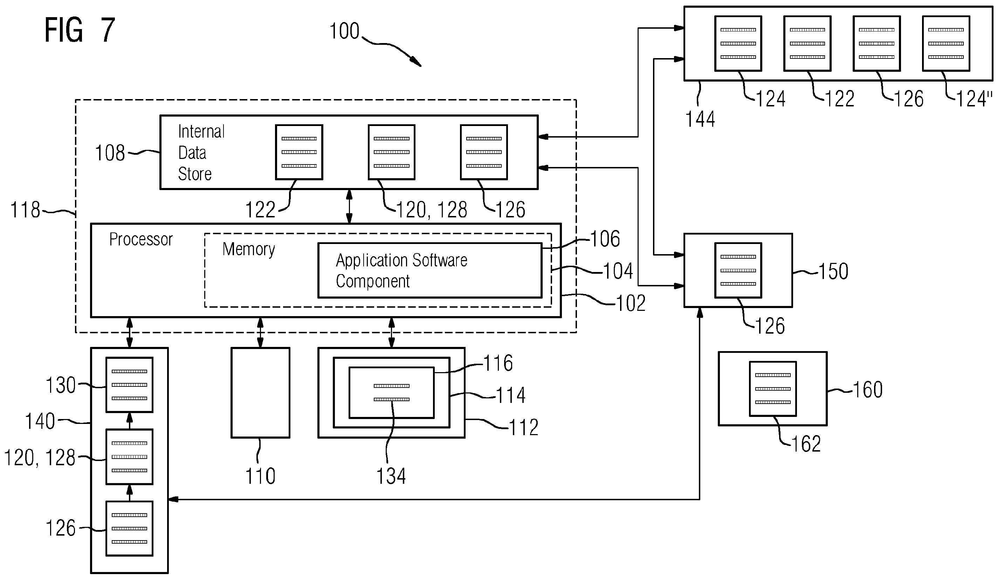

With reference to Fig. 7, a functional block diagram of yet another example computer system or data processing system 100 is illustrated that facilitates managing apps 120, especially an app 120 comprising an event artifact 122.

As illustrated in Fig. 7, the developer or user of the producing app 124 may have made amendments to the producing app 124 resulting in an amended producing app 124'. Upon such an amendment of the producing app 124 at least two options 134 may be displayed, e.g., via the app development UI 116, to the developer or user of the (consuming) app 120. The displayed options 134 may comprise the option to continue the use of the event artifact 122 of the original producing app 124 or the option to start the use of the respective amended event artifact 122 of the amended producing app 124''. The developer or user may then input his or her selection of one of the displayed options 134, whereby the selection may be captured. If the user selects to start using the respective event artifact 122 of the amended producing app 124'', the event information 126 corresponding to the event artifact 122 from the respective amended producing app 124" may be imported to the data storage platform 150. This event information 126 may then be provided from the data storage platform 150 to the deployed and running app 120.

In some examples, the mentioned options 134 may be displayed to a user of the (consuming) app 120 via the above-mentioned display user interface 142.

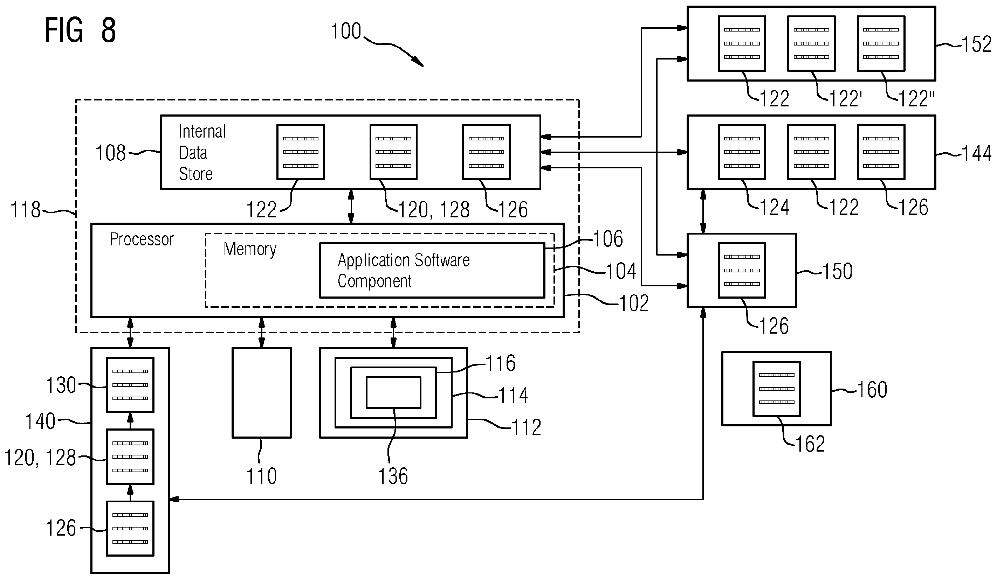

With reference to Fig. 8, a functional block diagram of yet another example computer system or data processing system 100 is illustrated that facilitates managing apps 120, especially an app 120 comprising an event artifact 122.

As illustrated in Fig. 8, a user (here developer of the app 120) may use an event artifacts search UI 136 for searching in a repository 152 in which event artifacts 122 may be stored which are usable for app development. In some examples, the event artifacts search UI 136 may be comprised by the app development UI 116.

It should also be appreciated, that in further examples, information relating to the generated output data 130 of the app 120 may be stored as an event artifact 122 in the repository 152 to allow for reuse of the stored event artifact 122 for app development, e.g., by other users or developers.

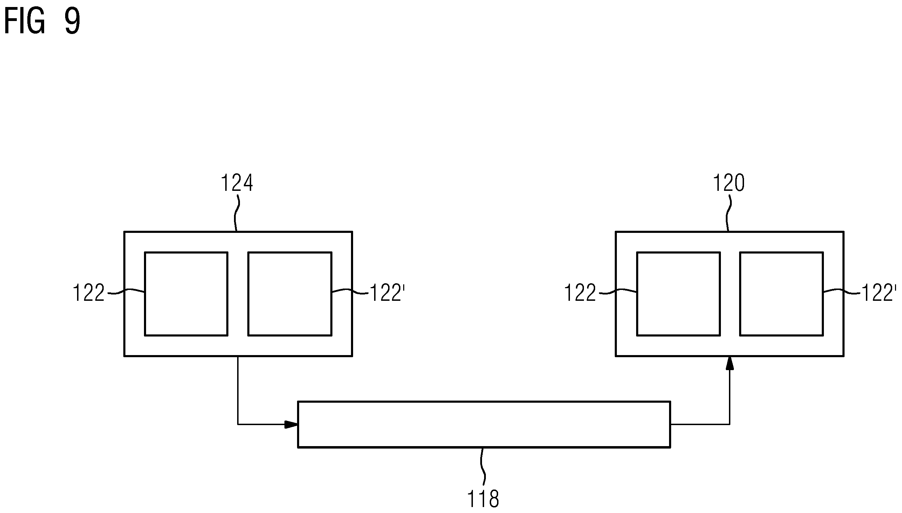

With reference to Fig. 9, a flow diagram of an example methodology that facilitates managing an app 120 in a product system 100 is illustrated, especially an app 120 comprising an event artifact 122.

As illustrated in Fig. 9, the respective producing app 124 may provide event artifacts 122, 122', such as an event notification (122) and an event-triggered state transfer (122'). The provided artifacts 122, 122' may be used by the app development platform 118 for developing the (consuming) app 120. In some examples, during the development of the (consuming) app 120, the provided artifacts 122, 122' may be imported to the app development UI 118 of the app development platform 118 and the app 120 may be developed using the provided artifacts 122, 122'. Optionally, only one or more than two event artifacts 122 may be used.

A comparable concept may, e.g., also apply with respect to the repository 152 for storing event artifacts 122 which may be available for reuse during app development. The event artifact 122 may be provided to the repository 152 by the developer or user of a first app, e.g., the producing app 124. The developer or user of the second app, e.g., the (consuming) app 120 may search the repository 152, e.g., via the event artifacts search UI 136. This user may select a suitable event artifact 122 which is available in the repository 152 and import the selected event artifact 122 to the app development UI 118 and develop the (consuming) app 120 using the imported event artifact 122.

A comparable concept may, e.g., also apply with respect to the data storage platform 150 which may be arranged between the producing app 124 and the (consuming) app 120. Herein, event information 126 corresponding to the respective provided event artifact 122 may be imported from the producing app 124 to the data storage platform 150 which may then provide the event information 126 to the (consuming) app 120.

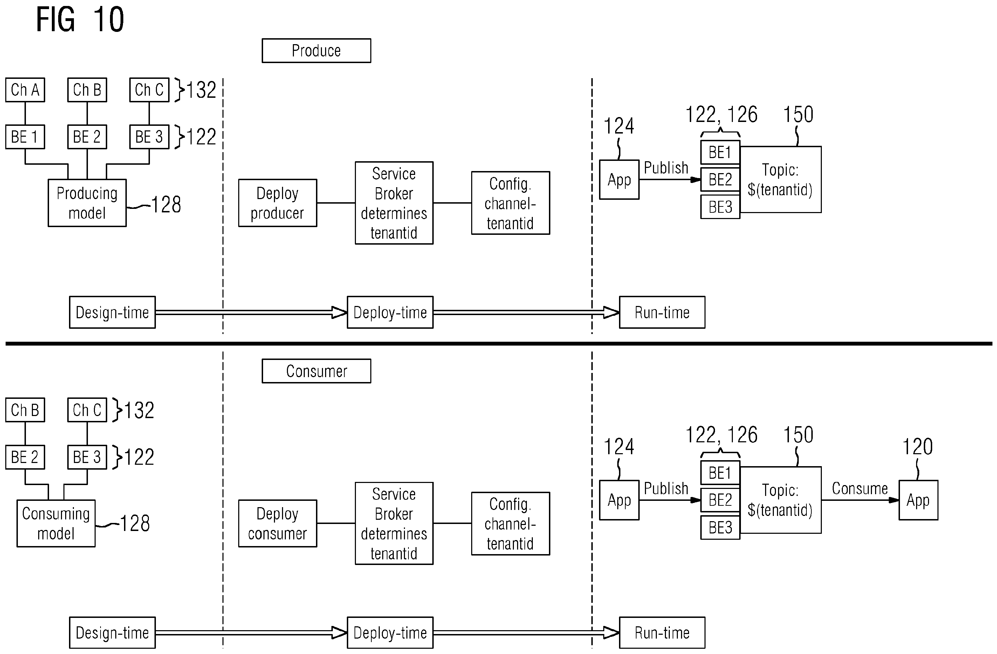

With reference to Fig. 10, a flow diagram of an example methodology that facilitates managing an app 120 in a product system 100 is illustrated, especially an app 120 comprising an event artifact 122.

Fig. 10 comprises a first workflow for developing ("Designtime"), deploying ("Deploy-time") and running ("Run-time" in the sense of time of operation) a producing app 124 ("Produce") on its upper half and a second workflow for developing, deploying and running a consuming app 120 ("Consume") on its lower half.

During the development phase of both the producing app 124 and the consuming app 120, a corresponding business logic, e.g., reflected by a corresponding app algorithm 128, may be drawn up, e.g., using the app development UI 116 of the app development platform 118. The app algorithm 128 may be provided with suitable event artifacts 122 which, in some examples, may be embedded or bundled in event channels 132. During the deployment phase of both the producing app 124 and the consuming app 120, the respective app 124, 120 may be deployed, and the communication links to the data storage platform 150 may be set up. This setup may comprise determining a tenant ID (e.g., for the respective user or customer) and configuring a tenant for each channel 132. In some examples, the tenant may be related or correspond to the data storage platform 150.

During the operation or run-time of the producing app 124, the producing app 124 may generate event information 126 corresponding to the event artifacts 122 which may be published or communicated to the data storage platform 150, e.g., using the above-mentioned channels 132. In some examples, several channels 132 may be combined in one tenant or data storage platform 150. During the operation or run-time of the consuming app 120, the data storage platform 150 may provide event information 126 to the consuming app 120, wherein the provided event information 126 may be of interest for the business logic or the app algorithm 128 of the consuming app 120.

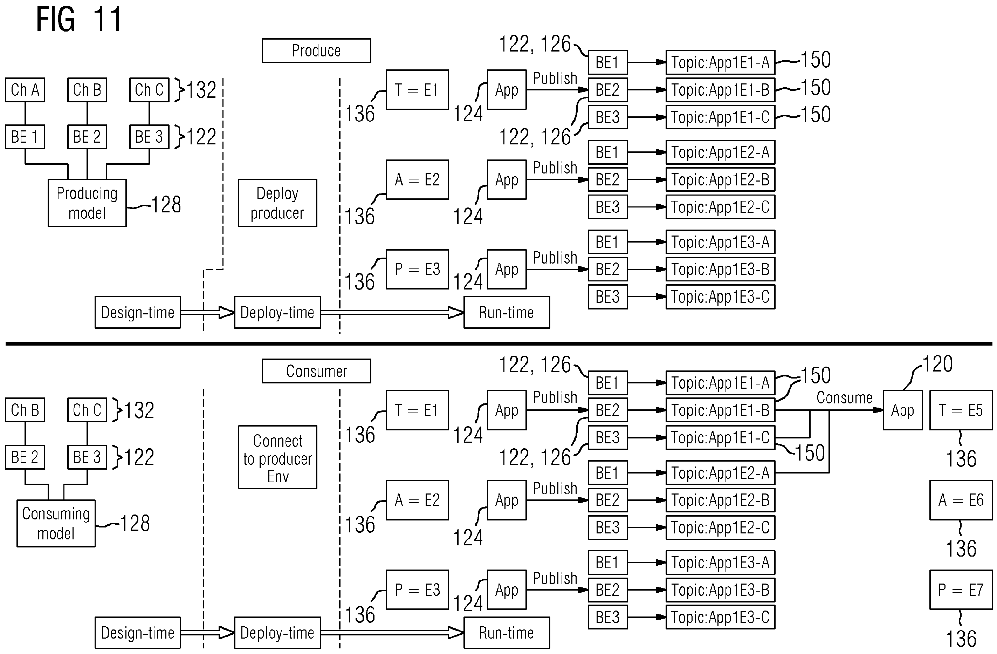

With reference to Fig. 11, a flow diagram of an example methodology that facilitates managing an app 120 in a product system 100 is illustrated, especially an app 120 comprising an event artifact 122.

Fig. 11 illustrates a methodology which has some similarities with the methodology illustrated in Fig. 10. One of the differences may concern the deployment phase of both the producing app 124 and the consuming app 120 which may simply comprise deploying the respective app 124, 120 on a respective target device.

Further, during the operation or run-time of both the producing app 124 and the consuming app 120, there may be different software environments 136 on or in which the respective app 124, 120 may be deployed. Herein, the deployment of the respective app 124, 120 in the respective software environment 136 may be done in the deployment phase. For each app 124, 120 in each software environment 136 and each event artifact 122 or event channel 132, a separate data storage platform 150 or tenant may be provided. During the operation or run-time of the producing app 124, corresponding event information 126 may be imported from the respective producing app 124 deployed on the respective software environment 136 to the respective data storage platform 150 or tenant or event channel 132. During the operation or run-time of the consuming app 120, the data storage platform 150 may provide event information 126 to the respective consuming app 120 deployed on the respective software environment 136, wherein the provided event information 126 may be of interest for the business logic or the app algorithm 128 of the respective consuming app 120. In some examples, the respective consuming app 120 may receive event information 126 from different data storage platforms 150 or channels 132, in further examples, the respective consuming app 120 may also receive event information 126 from different software environments 136 (cf. thin line).

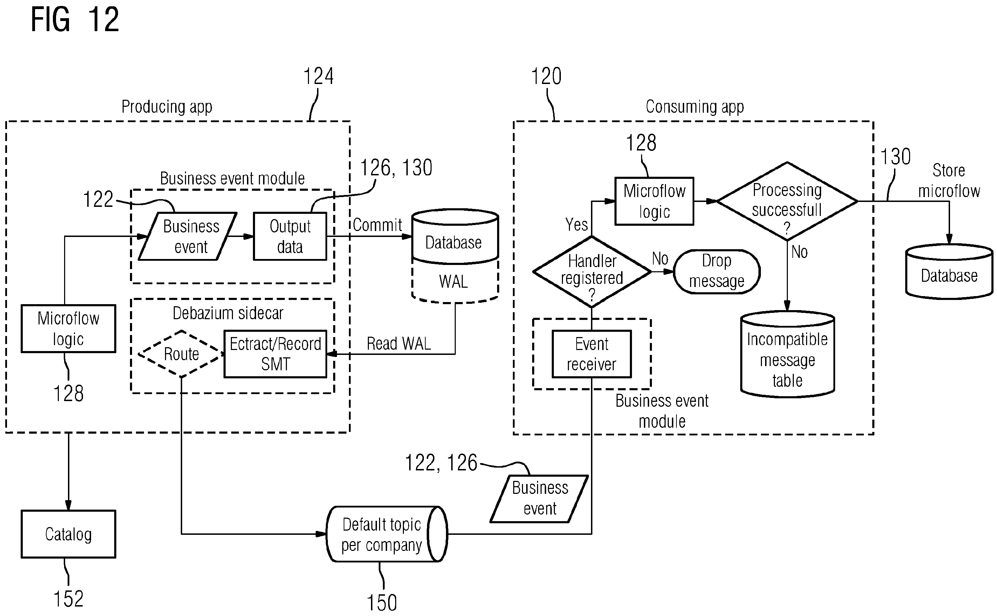

With reference to Fig. 12, a flow diagram of an example methodology that facilitates managing an app 120 in a product system 100 is illustrated, especially an app 120 comprising an event artifact 122.

As illustrated in Fig. 12, both a producing app 124 and a consuming app 120 may comprise a business logic or app algorithm 128 ("Microflow logic"). In the producing app 120, the app algorithm 128 may provide an event artifact 122 as an output, wherein specific output data 130 relating to events may be provided as event artifacts 126 ("Outbox table"). The event information 126 may be verified and be stored using a write-ahead-log ("WAL") before it is provided to a data storage platform 150 ("Default topic per company", e.g., using an event channel 132), e.g., via a "Debezium sidecar").

The event artifact 122 and the corresponding event information 126 may then be provided from the data storage platform 150 to the consuming app 120 where it may be processed by the business logic or app algorithm 128 of the consuming app 120 to generate output data 130 of the consuming app 120.

In some examples, a user (here developer of the consuming app 120) may use an event artifacts search UI 136 for searching in a repository 152 in which event artifacts 122 may be stored which are usable for app development. In some examples, the event artifacts search UI 136 may be comprised by the app development UI 116.

It should also be appreciated, that in further examples, information relating to the generated output data 130 of the consuming app 120 (or the producing app) may be stored as an event artifact 122 in the repository 152 to allow for reuse of the stored event artifact 122 for app development, e.g., by other users or developers.

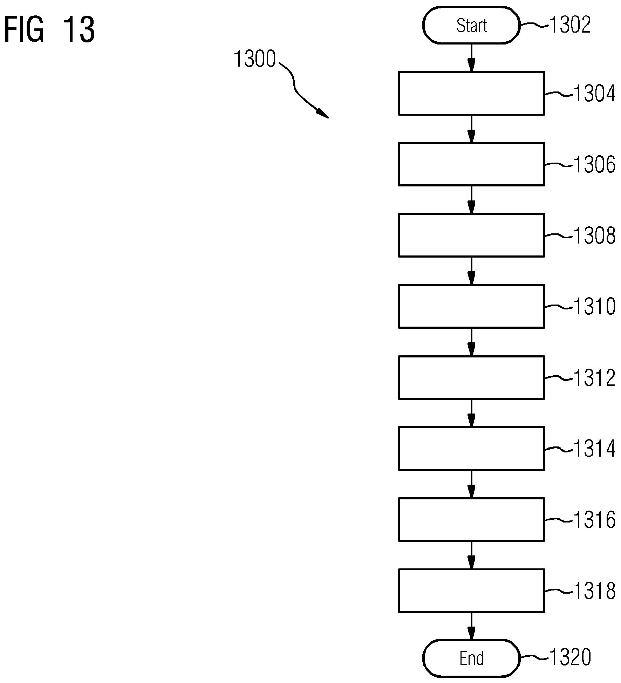

Referring now to Fig. 13, a methodology 1300 that facilitates managing apps, such as developing an app comprising an event artifact, is illustrated. The method may start at 1302 and the methodology may comprise several acts carried out through operation of at least one processor.

These acts may comprise an act 1304 providing an app development user interface (UI) of an app development platform to a user for developing an app; an act 1306 of capturing the user's intent to import a respective event artifact from a respective deployed and running producing app to develop the app in response to user interactions with the app development UI; an act 1308 of importing the respective event artifact corresponding to the captured user's intent to the app development UI; an act 1310 of developing the app through the app development UI by using the imported respective event artifact; an act 1312 of deploying and running the developed app on a target device; an act 1314 of importing event information corresponding to the respective event artifact from the respective producing app to a data storage platform; an act 1316 of providing the event information imported to the data storage platform from the data storage platform to the deployed and running app; and an act 1318 of applying an app algorithm comprised by the deployed and running app on the provided event information to generate output data. At 1320 the methodology may end.

It should further be appreciated that the methodology 1300 may comprise other acts and features discussed previously with respect to the computer-implemented method of managing an app, especially of developing an app comprising an event artifact.

For example, the methodology may further comprise the act of causing to display the generated output data to a user of the target device via a user interface of the target device.

In some examples, the methodology may further comprise the acts of causing to use the generated output data for analyzing, monitoring, operating and/or controlling the target device or another device connected to the target device and/or of causing to analyze and/or monitor the respective target device's user using the generated output data.

It should also be appreciated that in some examples, the methodology may - upon an amendment of the producing app - further comprise the acts of displaying at least two options to the user corresponding to a continued use of the respective event artifact of the original producing app or a started use of the respective event artifact of the amended producing app; of capturing the user's intent to select one of the displayed options; and - if the user selects to start using the respective event artifact of the amended producing app - of importing event information corresponding to the respective event artifact from the respective amended producing app to the data storage platform.

For example, if the user selects to start using the respective event artifact of the respective amended producing app which is incompatible with the respective event artifact of the respective producing app, the methodology may further comprise the acts of importing the respective event artifact of the respective amended producing app to the app development UI; of developing the app through the app development UI by using the imported respective event artifact of the respective amended producing app; and of deploying and running the developed app on the target device.

In some examples, the methodology may further comprise the act of providing an event artifacts search UI to the user for searching in a repository for storing event artifacts which are usable for app development.

It should also be appreciated that in some examples, the methodology may further comprise the act of storing information relating to the generated output data as an event artifact in a repository of event artifacts which are reusable for app development.

For example, the methodology may further comprise the acts of verifying the respective event information corresponding to the respective event artifact from the respective producing app; and of importing the respective event information corresponding to the respective event artifact from the respective producing app to the data storage platform only if the respective event information has been verified.

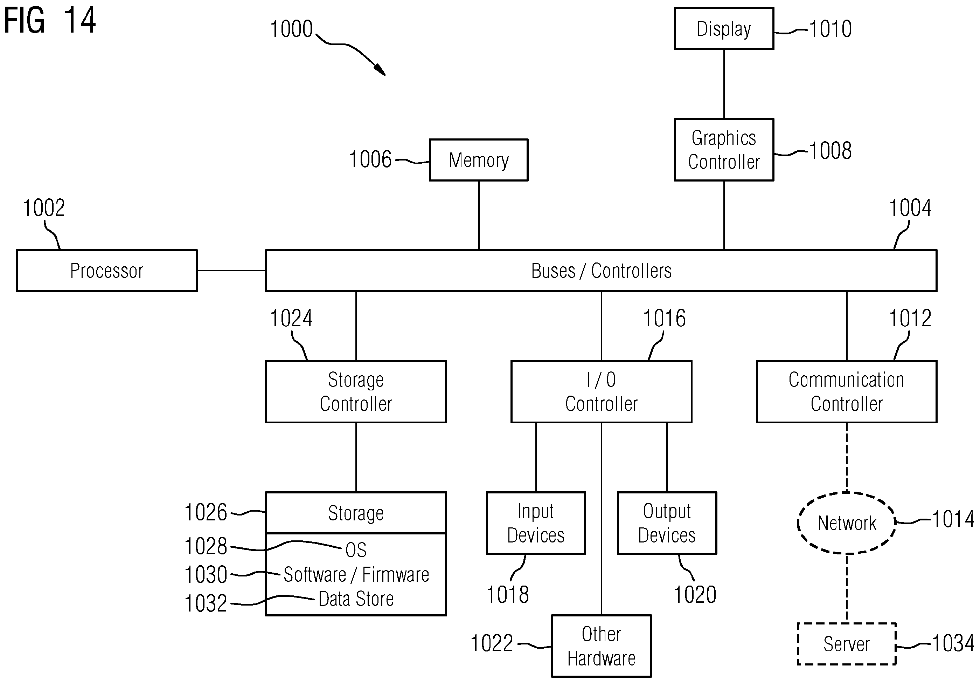

Fig. 14 illustrates a block diagram of a data processing system 1000 (also referred to as a computer system) in which an embodiment can be implemented, for example, as a portion of a product system, and/or other system operatively configured by software or otherwise to perform the processes as described herein. The data processing system 1000 may comprise, for example, the computer or IT system or data processing system 100 mentioned above. The data processing system depicted comprises at least one processor 1002 (e.g., a CPU) that may be connected to one or more bridges/controllers/buses 1004 (e.g., a north bridge, a south bridge). One of the buses 1004, for example, may comprise one or more I/O buses such as a PCI Express bus. Also connected to various buses in the depicted example may comprise a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures comprise IA-32, x86-64, and ARM processor architectures.

Other peripherals connected to one or more buses may comprise communication controllers 1012 (Ethernet controllers, WiFi controllers, cellular controllers) operative to connect to a local area network (LAN), Wide Area Network (WAN), a cellular network, and/or other wired or wireless networks 1014 or communication equipment.

Further components connected to various busses may comprise one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) comprising input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that comprises a touch screen that serves as both an input and display device. Further, it should be appreciated that some input devices (such as a laptop) may comprise a plurality of different types of input devices (e.g., touch screen, touch pad, keyboard). Also, it should be appreciated that other peripheral hardware 1022 connected to the I/O controllers 1016 may comprise any type of device, machine, or component that is configured to communicate with a data processing system.

Additional components connected to various busses may comprise one or more storage controllers 1024 (e.g., SATA). A storage controller may be connected to a storage device 1026 such as one or more storage drives and/or any associated removable media, which can be any suitable non-transitory machine usable or machine-readable storage medium. Examples comprise nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system in accordance with an embodiment of the present disclosure may comprise an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may comprise Microsoft Windows, Linux, UNIX, iOS, and Android operating systems. Also, examples of data stores comprise data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, comprising the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures comprise VMware ESCi, Microsoft Hyper-V, Xen, and KVM.

Those of ordinary skill in the art will appreciate that the hardware depicted for the data processing system may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be comprised in a client device that communicates with the server (and/or a virtual machine executing on the server) through a wired or wireless network (which may comprise the Internet). In some embodiments, such a client device, for example, may execute a remote desktop application or may correspond to a portal device that carries out a remote desktop protocol with the server in order to send inputs from an input device to the server and receive visual information from the server to display through a display device. Examples of such remote desktop protocols comprise Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "comprise" and "comprise," as well as derivatives thereof, mean inclusion without limitation. The singular forms "a", "an" and "the" are intended to comprise the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to comprise, be comprised within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

In addition, the term "adjacent to" may mean: that an element is relatively near to but not in contact with a further element; or that the element is in contact with the further portion, unless the context clearly indicates otherwise.

None of the description in the present patent document should be read as implying that any particular element, step, act, or function is an essential element, which must be comprised in the claim scope: the scope of patented subject matter is defined only by the allowed claims.

## Claims

1. Computer-implemented method comprising:
• providing an app development user interface, UI, (116) of an app development platform (118) to a user for developing an app (120);
• capturing the user's intent to import a respective event artifact (122) from a respective deployed and running producing app (124) to develop the app (120) in response to user interactions with the app development UI (116);
• importing the respective event artifact (122) corresponding to the captured user's intent to the app development UI (116);
• developing the app (120) through the app development UI (116) by using the imported respective event artifact (122);
• deploying and running the developed app (120) on a target device (140);
• importing event information (126) corresponding to the respective event artifact (122) from the respective producing app (124) to a data storage platform (150), wherein the respective producing app (124) is deployed and running and includes the event artifact (122), wherein the respective event artifact (122) characterizes an event or a type of event, and wherein the event information (126) includes a specific change of a status when an event is just occurring during the operation of the respective producing app (124);
• verifying the respective event information (126) corresponding to the respective event artifact (122) from the respective producing app (124);
• wherein the importing the respective event information (126) corresponding to the respective event artifact (122) from the respective producing app (124) to the data storage platform (150) is performed only if the respective event information (126) has been verified;
• providing the event information (126) imported to the data storage platform (150) from the data storage platform (150) to the deployed and running app (120); and
• applying an app algorithm (128) comprised by the deployed and running app (120) on the provided event information (126) to generate output data (130).

2. Computer-implemented method according to claim 1, further including:
• causing to display the generated output data (130) to a user of the target device (140) via a user interface (142) of the target device (140).

3. Computer-implemented method according to any of the preceding claims, further including:
• causing to use the generated output data (130) for analyzing, monitoring, operating and/or controlling the target device (140) or another device (144) connected to the target device (140) and/or
• causing to analyze and/or monitor the respective target device's (140) user using the generated output data (130).

4. Computer-implemented method according to any of the preceding claims,
wherein the respective event artifact (122) comprises at least one event notification and/or at least one eventcarried state transfer.

5. Computer-implemented method according to any of the preceding claims,
wherein the respective event artifact (122) comprises a respective event channel (132) comprising at least one event artifact (122) from the respective deployed and running producing app (124).

6. Computer-implemented method according to claim 5,
wherein the respective event channel (132) comprises at least one event artifact (122) from the respective deployed and running producing app (124) and at least one event artifact (122') from at least one second deployed and running producing app (124').

7. Computer-implemented method according to any of the preceding claims, further comprising upon an amendment of the producing app (124):
• displaying at least two options (134) to the user corresponding to a continued use of the respective event artifact (122) of the original producing app (124) or a started use of the respective event artifact (122) of the amended producing app (124");
• capturing the user's intent to select one of the displayed options (134); and
• if the user selects to start using the respective event artifact (122) of the amended producing app (124"): importing event information (126) corresponding to the respective event artifact (122) from the respective amended producing app (124") to the data storage platform (150).

8. Computer-implemented method according to claim 7, further comprising, if the user selects to start using the respective event artifact (122) of the respective amended producing app (124") which is incompatible with the respective event artifact (122) of the respective producing app (124):
• importing the respective event artifact (122) of the respective amended producing app (124") to the app development UI (116);
• developing the app (120) through the app development UI (116) by using the imported respective event artifact (122) of the respective amended producing app (124"); and
• deploying and running the developed app (120) on the target device (140).

9. Computer-implemented method according to any of the preceding claims, further comprising:
• providing an event artifacts search UI (136) to the user for searching in a repository (152) for storing event artifacts (122) which are usable for app development.

10. Computer-implemented method according to any of the preceding claims, further comprising:
• storing information relating to the generated output data (130) as an event artifact (122) in a repository (152) of event artifacts (122) which are reusable for app development.

11. Computer-implemented method according to any of the preceding claims,
• wherein the app (120) to be created includes at least a part of a first model, wherein the first model characterizes the app (120) to be created and/or functionalities of the app (120) to be created,
• wherein the first model includes at least one of entities, attributes which assign properties and values to the entities, and associations which allow entities to communicate with one another, or any combination thereof, wherein the entities represent the event artifacts (122), the event information (126) or information objects,
• wherein the first model includes workflows for processing data related to the event artifacts (122), the event information (126), the information objects or pages of the app (120),
• wherein the pages serve to display the event artifacts (122), the event information (126) or the information objects or information derived from the event artifacts (122), the event information (126) or the information objects to an app user.

12. Computer system (100, 118) arranged and configured to execute the steps of the computer-implemented method according to any one of the preceding claims.

13. A computer program product (162), comprising computer program code which, when executed by a computer system (100, 118), cause the computer system (100, 118) to carry out the method of one of the claims 1 to 11.

14. A computer-readable medium (160) comprising a computer program product (162) comprising computer program code which, when executed by a computer system (100, 118), cause the computer system (100, 118) to carry out the method of one of the claims 1 to 11.

## Patentansprüche

1. Computerimplementiertes Verfahren, umfassend:
• Bereitstellen einer App-Entwicklungs-Benutzerschnittstelle, UI, (116) einer App-Entwicklungs-Plattform (118) an einen Benutzer zum Entwickeln der App (120);
• Erfassen der Absicht des Benutzers, ein jeweiliges Ereignisartefakt (122) aus einer jeweiligen bereitgestellten und ausgeführten Produktions-App (124) zum Entwickeln der App (120) als Reaktion auf Benutzerinteraktionen mit der App-Entwicklungs-UI (116) zu importieren;
• Importieren des jeweiligen Ereignisartefakts (122) entsprechend der erfassten Absicht des Benutzers in die App-Entwicklungs-UI (116);
• Entwickeln der App (120) über die App-Entwicklungs-UI (116) unter Verwendung des importierten jeweiligen Ereignisartefakts (122);
• Bereitstellen und Ausführen der entwickelten App (120) auf einer Zielvorrichtung (140);
• Importieren von Ereignisinformationen (126), die dem jeweiligen Ereignisartefakt (122) entsprechen, aus der jeweiligen Produktions-App (124) in eine Datenspeicherplattform (150), wobei die jeweilige Produktions-App (124) bereitgestellt ist und ausgeführt wird und das Ereignisartefakt (122) aufweist, wobei das jeweilige Ereignisartefakt (122) ein Ereignis oder eine Art von Ereignis charakterisiert, und wobei die Ereignisinformationen (126) eine spezifische Statusänderung aufweisen, wenn ein Ereignis gerade während des Betriebs der jeweiligen Produktions-App (124) auftritt;
• Verifizieren der jeweiligen Ereignisinformationen (126), die dem jeweiligen Ereignisartefakt (122) entsprechen, aus der jeweiligen Produktions-App (124);
• wobei das Importieren der jeweiligen Ereignisinformationen (126), die dem jeweiligen Ereignisartefakt (122) entsprechen, aus der jeweiligen Produktions-App (124) in die Datenspeicherplattform (150) nur durchgeführt wird, wenn die jeweiligen Ereignisinformationen (126) verifiziert wurden;
• Bereitstellen der in die Datenspeicherplattform (150) importierten Ereignisinformationen (126) von der Datenspeicherplattform (150) an die bereitgestellte und ausgeführte App (120); und
• Anwenden eines App-Algorithmus (128), den die bereitgestellte und ausgeführte App (120) umfasst, auf die bereitgestellten Ereignisinformationen (126), um Ausgabedaten zu erzeugen (130).

2. Computerimplementiertes Verfahren nach Anspruch 1, ferner aufweisend:
• Veranlassen, dass die erzeugten Ausgabedaten (130) einem Benutzer der Zielvorrichtung (140) über eine Benutzerschnittstelle (142) der Zielvorrichtung (140) angezeigt werden.

3. Computerimplementiertes Verfahren nach einem der vorhergehenden Ansprüche, ferner aufweisend:
• Veranlassen, dass die erzeugten Ausgabedaten (130) zum Analysieren, Überwachen, Betreiben und/oder Steuern der Zielvorrichtung (140) oder einer anderen Vorrichtung (144), die mit der Zielvorrichtung (140) verbunden ist, verwendet werden, und/oder
• Veranlassen, dass der Benutzer der jeweiligen Zielvorrichtung (140) unter Verwendung der erzeugten Ausgabedaten (130) analysiert und/oder überwacht wird.

4. Computerimplementiertes Verfahren nach einem der vorhergehenden Ansprüche,
wobei das jeweilige Ereignisartefakt (122) mindestens eine Ereignisbenachrichtigung und/oder mindestens einen ereignisbedingten Zustandstransfer umfasst.

5. Computerimplementiertes Verfahren nach einem der vorhergehenden Ansprüche,
wobei das jeweilige Ereignisartefakt (122) einen jeweiligen Ereigniskanal (132) umfasst, der mindestens ein Ereignisartefakt (122) aus der jeweiligen bereitgestellten und ausgeführten Produktions-App (124) umfasst.

6. Computerimplementiertes Verfahren nach Anspruch 5,
wobei der jeweilige Ereigniskanal (132) mindestens ein Ereignisartefakt (122) aus der jeweiligen bereitgestellten und ausgeführten Produktions-App (124) und mindestens ein Ereignisartefakt (122')aus der mindestens einen zweiten bereitgestellten und ausgeführten Produktions-App (124') umfasst.

7. Computerimplementiertes Verfahren nach einem der vorhergehenden Ansprüche, ferner umfassend bei einer Abänderung der Produktions-App (124):
• Anzeigen von mindestens zwei Optionen (134) für den Benutzer, die einer fortgesetzten Verwendung des jeweiligen Ereignisartefakts (122) der ursprünglichen Produktions-App (124) oder einer begonnenen Verwendung des jeweiligen Ereignisartefakts (122) der abgeänderten Produktions-App (124") entsprechen;
• Erfassen der Absicht des Benutzers, eine der angezeigten Optionen (134) auszuwählen; und
• wenn der Benutzer auswählt, dass mit einer Verwendung des jeweiligen Ereignisartefakts (122) der abgeänderten Produktions-App (124") begonnen werden soll: Importieren von Ereignisinformationen (126), die dem jeweiligen Ereignisartefakt (122) entsprechen, aus der jeweiligen abgeänderten Produktions-App (124") in die Datenspeicherplattform (150).

8. Computerimplementiertes Verfahren nach Anspruch 7, ferner umfassend, wenn der Benutzer auswählt, dass mit einer Verwendung des jeweiligen Ereignisartefakts (122) der jeweiligen abgeänderten Produktions-App (124") begonnen werden soll, das mit dem jeweiligen Ereignisartefakt (122) der jeweiligen Produktions-App (124) inkompatibel ist:
• Importieren des jeweiligen Ereignisartefakts (122) der jeweiligen abgeänderten Produktions-App (124") in die App-Entwicklungs-UI (116);
• Entwickeln der App (120) über die App-Entwicklungs-UI (116) unter Verwendung des importierten jeweiligen Ereignisartefakts (122) der jeweiligen abgeänderten Produktions-App (124"); und
• Bereitstellen und Ausführen der entwickelten App (120) auf der Zielvorrichtung (140).

9. Computerimplementiertes Verfahren nach einem der vorhergehenden Ansprüche, ferner umfassend:
• Bereitstellen einer Ereignisartefakte-Such-UI (136) für den Benutzer zum Suchen in einem Repository (152) zum Speichern von Ereignisartefakten (122), die für die App-Entwicklung verwendbar sind.

10. Computerimplementiertes Verfahren nach einem der vorhergehenden Ansprüche, ferner umfassend:
• Speichern von Informationen in Bezug auf die erzeugten Ausgabedaten (130) als ein Ereignisartefakt (122) in einem Repository (152) von Ereignisartefakten (122), die für die App-Entwicklung wiederverwendbar sind.

11. Computerimplementiertes Verfahren nach einem der vorhergehenden Ansprüche,
• wobei die zu erstellende App (120) mindestens einen Teil eines ersten Modells aufweist, wobei das erste Modell die zu erstellende App (120) und/oder Funktionalitäten der zu erstellenden App (120) charakterisiert,
• wobei das erste Modell Entitäten, Attribute, die den Entitäten Eigenschaften und Werte zuweisen, und/oder Assoziationen, die Entitäten ermöglichen, miteinander zu kommunizieren, oder eine beliebige Kombination davon aufweist, wobei die Entitäten die Ereignisartefakte (122), die Ereignisinformationen (126) oder Informationsobjekte darstellen,
• wobei das erste Modell Arbeitsabläufe zum Verarbeiten von Daten in Bezug auf die Ereignisartefakte (122), die Ereignisinformationen (126), die Informationsobjekte oder Seiten der App (120) aufweist,
• wobei die Seiten dazu dienen, die Ereignisartefakte (122), die Ereignisinformationen (126) oder die Informationsobjekte oder Informationen, die aus den Ereignisartefakten (122), den Ereignisinformationen (126) oder den Informationsobjekten abgeleitet werden, für einen App-Benutzer anzuzeigen.

12. Computersystem (100, 118), das dazu eingerichtet und ausgelegt ist, die Schritte des computerimplementierten Verfahrens nach einem der vorhergehenden Ansprüche auszuführen.

13. Computerprogrammprodukt (162), das Computerprogrammcode umfasst, der, wenn er durch ein Computersystem (100, 118) ausgeführt wird, das Computersystem (100, 118) zum Durchführen des Verfahrens nach einem der Ansprüche 1 bis 11 veranlasst.

14. Computerlesbares Medium (160), das ein Computerprogrammprodukt (162) umfasst, das Computerprogrammcode umfasst, der, wenn er durch ein Computersystem (100, 118) ausgeführt wird, das Computersystem (100, 118) zum Durchführen des Verfahrens nach einem der Ansprüche 1 bis 11 veranlasst.

## Revendications

1. Procédé mis en œuvre par ordinateur comprenant :
• se procurer une interface d'utilisateur, UI, (116) de développement d'une application d'une plateforme (118) de développement d'application à un utilisateur pour développer une application (120) ;
• capter l'intention de l'utilisateur d'importer un artefact (122) d'évènement respectif d'une application (124) de production déployée et exploitée pour développer l'application (120) en réaction aux interactions d'utilisateur avec l'UI (116) de développement d'une application ;
• importer l'artefact (122) d'évènement respectif correspondant à l'intention captée de l'utilisateur à l'UI (116) de développement d'une application ;
• développer l'application (120) par l'UI (116) de développement d'une application en utilisant un artefact (122) d'évènement respectif importé ;
• déployer et exploiter l'application (120) développée sur un dispositif (140) cible ;
• importer une information (126) d'évènement correspondant à l'artefact (122) d'évènement respectif de l'application (124) de production respective à une plateforme (150) de mise en mémoire de données, dans lequel l'application (124) de production respective est déployée et exploitée et comprend l'artefact (122) d'évènement, dans lequel l'artefact (122) d'évènement respectif caractérise un évènement ou un type d'évènement, et dans lequel l'information (126) d'évènement comprend un changement spécifique d'un statut, lorsqu'un évènement vient de se produire pendant le fonctionnement de l'application (124) de production respective ;
• vérifier l'information (126) d'évènement respective correspondant à l'artefact (122) d'évènement respectif de l'application (124) de production respective ;
• dans lequel importer l'information (126) d'évènement respective correspondant à l'artefact (122) d'évènement respectif de l'application (124) de production respective à la plateforme (150) de mise en mémoire de données est effectué seulement si l'information (126) d'évènement respective a été vérifiée ;
• donner l'information (126) d'évènement, importée à la plateforme (150) de mise en mémoire de données, de la plateforme (150) de mise en mémoire de données à l'application (120) déployée et exploitée ; et
• appliquer un algorithme (128) d'application compris par l'application (120) déployée et exploitée à l'information (126) d'évènement donnée pour créer une donnée (130) de sortie.

2. Procédé mis en œuvre par ordinateur suivant la revendication 1, comprenant en outre :
• faire s'afficher la donnée (130) de sortie créée à un utilisateur du dispositif (140) cible par l'interface (142) d'utilisateur du dispositif (140) cible.

3. Procédé mis en œuvre par ordinateur suivant l'une quelconque des revendications précédentes, comprenant en outre :
• faire utiliser la donnée (130) de sortie créée pour analyser, contrôler, faire fonctionner et/ou commander le dispositif (140) cible ou un autre dispositif (144) relié au dispositif (140) cible et/ou
• faire analyser et/ou contrôler l'utilisateur du dispositif (140) cible respectif en utilisant la donnée (130) de sortie créée.

4. Procédé mis en œuvre par ordinateur suivant l'une quelconque des revendications précédentes,
dans lequel l'artefact (122) d'évènement respectif comprend au moins une notification d'évènement et/ou au moins un transfert d'état porté par l'évènement.

5. Procédé mis en œuvre par ordinateur suivant l'une quelconque des revendications précédentes,
dans lequel l'artefact (122) d'évènement respectif comprend un canal (132) d'évènement respectif comprenant au moins un artefact (122) d'évènement de l'application (124) de production respective déployée et exploitée.

6. Procédé mis en œuvre par ordinateur suivant la revendication 5,
dans lequel le canal (132) d'évènement respectif comprend au moins un artefact (122) d'évènement de l'application (124) de production respective déployée et exploitée et au moins un artefact (122') d'évènement d'au moins d'une deuxième application (124') de production déployée et exploitée.

7. Procédé mis en œuvre par ordinateur suivant l'une quelconque des revendications précédentes, comprenant en outre, après une modification de l'application (124) de production :
• afficher au moins deux options (134) à l'utilisateur correspondant à une utilisation continuée de l'artefact (122) d'évènement respectif de l'application (124) de production d'origine ou à l'utilisation démarrée de l'artefact (122) d'évènement respectif de l'application (124") de production modifiée ;
• capter l'intention de l'utilisateur pour sélectionner l'une des options (134) affichée ; et
• si l'utilisateur sélectionne le démarrage utilisant l'artefact (122) d'évènement respectif de l'application (124") de production modifiée : importer une information (126) d'évènement correspondant à l'artefact (122) d'évènement respectif de l'application (124") de production respective modifiée à la plateforme (150) de mise en mémoire de données.

8. Procédé mis en œuvre par ordinateur suivant la revendication 7, comprenant en outre, si l'utilisateur sélectionne de démarrer en utilisant l'artefact (122) d'évènement respectif de l'application (124") de production respective modifiée, qui est incompatible avec l'artefact (122) d'évènement respectif de l'application (124) de production respective :
• importer l'artefact (122) d'évènement respectif de l'application (124") de production respective modifiée à l'UI (116) de développement d'une application ;
• développer l'application (120) par l'UI (116) de développement d'une application en utilisant l'artefact (122) d'évènement respectif importé de l'application (124") de production respective modifiée ; et
• déployer et exploiter l'application (120) développée sur le dispositif (140) cible.

9. Procédé mis en œuvre par ordinateur suivant l'une quelconque des revendications précédentes, comprenant en outre :
• donner une UI (136) de recherche d'artefacts d'évènement à l'utilisateur pour rechercher dans un gisement (152) d'artefacts (122) d'évènement, ceux qui sont réutilisables pour un développement d'application.

10. Procédé mis en œuvre par ordinateur suivant l'une quelconque des revendications précédentes, comprenant en outre :
• mettre en mémoire une information se rapportant à la donnée (130) créée de sortie, comme artefact (122) dans un gisement (152) d'artefacts (122) d'évènement, ceux qui sont réutilisables pour un développement d'application.

11. Procédé mis en œuvre par ordinateur suivant l'une quelconque des revendications précédentes,
• dans lequel l'application (120) à créer comprend au moins une partie d'un premier modèle, dans lequel le premier modèle caractérise l'application (120) à créer et/ou des fonctionnalités de l'application (120) à créer,
• dans lequel le premier modèle comprend au moins l'un d'entités, d'attributs, qui affectent des propriétés et des valeurs aux entités, et des associations, qui permettent aux entités de communiquer les unes avec les autres, ou toutes leurs combinaisons, dans lequel les entités représentent les artefacts (122) d'évènement, l'information (126) d'évènement ou des objets d'information,
• dans lequel le premier modèle comprend des flux de travail pour le traitement de données se rapportant aux artefacts (122) d'évènement, à l'information (126) d'évènement, aux objets d'information ou à des pages de l'application (120),
• dans lequel les pages servent à afficher à un utilisateur d'application les artefacts (122) d'évènement, l'information (126) d'évènement ou des objets d'information ou une information déduite des artefacts (122) d'évènement, de l'information (126) d'évènement ou des objets d'information.

12. Système (100, 118) d'ordinateur agencé et configuré pour exécuter les stades du procédé mis en œuvre par ordinateur suivant l'une quelconque des revendications précédentes.

13. Produit (162) de programme d'ordinateur, comprenant un code de programme d'ordinateur qui, lorsqu'il est exécuté par un système (100, 118) d'ordinateur, fait que le système (100, 118) d'ordinateur exécute le procédé de l'une des revendications 1 à 11.

14. Support (160) déchiffrable par ordinateur comprenant un produit (162) de programme d'ordinateur comprenant un code de programme d'ordinateur qui, lorsqu'il est exécuté par un système (100, 118) d'ordinateur, fait que le système (100, 118) d'ordinateur exécute le procédé de l'une des revendications 1 à 11.
